# EUROPEAN PATENT APPLICATION

(11) **EP 4 701 273 A1**
(43) Date of publication of application: **25.02.2026**
(21) Application number: 24803004.1
(22) Date of filing: 08.05.2024
(51) Int. Cl.: H04W 48/16

(54) **COMMUNICATION METHOD AND COMMUNICATION APPARATUS**

(30) Priority: 11.05.2023 CN 202310532410
(71) Applicant: Huawei Technologies Co., Ltd., Shenzhen, Guangdong 518129 (CN)
(72) Inventor: DENG, Taoyu, Shenzhen, Guangdong 518129 (CN); LI, Yongcui, Shenzhen, Guangdong 518129 (CN); NI, Hui, Shenzhen, Guangdong 518129 (CN)
(74) Representative: Isarpatent
(86) International application number: PCT/CN2024/091675
(87) International publication number: WO 2024/230724

(57) **Abstract**

This application provides a communication method and a communication apparatus. The method includes: A first NEF network element receives an AF request from an AF network element, where the AF request is used to influence a session of a terminal device, and the AF request from the AF network element includes a first address; the first NEF network element obtains a second address corresponding to the first address and an address domain corresponding to the second address; and the first NEF network element sends the AF request to a UDR network element. According to the method described in this application, when the NEF obtains the AF request, the NEF can determine a roaming type of a session corresponding to the AF request, and the AF request can be used to influence a correct session.

## Description

This application claims priority to Chinese Patent Application No. 202310532410.X, filed with the China National Intellectual Property Administration on May 11, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

As mobile service traffic increases, a concept of edge computing (Edge Computing, EC) is proposed in the industry. In an edge computing scenario, a user plane function (User Plane Function, UPF) and a service processing function may be distributed to a network edge, to implement local processing of distributed service traffic, avoid excessive traffic centralization, and greatly reduce a specification requirement on a core equipment room and a centralized gateway. In addition, a distance of a backhaul network is shortened, and an end-to-end (end-to-end, E2E) delay and jitter of a user packet are reduced. In the EC scenario, to ensure that user equipment (User Equipment, UE) can obtain a good service, an application function (application function, AF) perceives a quality status of a service of the UE, and sends an AF request to influence a session of the UE via a session management function (Session Management Function, SMF) network element, so that the UE can obtain a better service. A manner in which the AF request is used to influence the session may be requesting to establish or modify a user plane path of the UE, or may be providing new application service deployment information.

In a country or a region, a cellular mobile communication network of an operator in a standard is referred to as a public land mobile network (public land mobile network, PLMN). A PLMN to which the UE subscribes is referred to as a home PLMN (Home PLMN, HPLMN), and represents a home operator of a subscriber. When the UE leaves a coverage area of the HPLMN due to movement or another reason, the UE may access a PLMN if the PLMN meets the following conditions: (1) The PLMN can cover a current position of the UE; and (2) an operator of the PLMN has signed a roaming agreement with an operator of the HPLMN of the UE. The PLMN is referred to as a visited PLMN (Visited PLMN, VPLMN). That the UE accesses the VPLMN is referred to as roaming.

Network address translation (Network Address Translation, NAT) may be used to translate a private network (Internet Protocol Address, IP) address into a public network address. If a session of a terminal device accesses a network based on a public network address obtained by performing NAT on a private IP address, when an NEF obtains an AF request for a session of the UE, the AF request includes the public network address that is of the session of the UE and that is obtained through NAT translation. In this case, the NEF cannot determine a roaming type corresponding to the session of the terminal device, and cannot determine how to process the AF request subsequently.

In Release 18, a new roaming scenario is proposed, and is referred to as an edge computing home routed with session breakout (Home Routed with Session Breakout, HR-SBO) roaming scenario. The UE may access an edge environment (Edge Hosting environment, EHE) via the VPLMN. In this scenario, a network exposure function (network exposure function, NEF) in the VPLMN may serve an HR-SBO roaming session as a visited NEF (Visited NEF, V-NEF). In addition, the NEF may also serve a non-roaming session in the VPLMN or a local breakout (local breakout, LBO) roaming session as a (home) NEF network element. Therefore, when the NEF receives an AF request, the NEF needs to distinguish between session types influenced by using the received AF request for a UE IP, to determine an action after the AF request is received, so that the AF request can be used to influence a correct session. Particularly, when the UE IP that the AF request is for is an address obtained through NAT translation, it is more difficult for the NEF to determine a roaming type of a session due to overlapping between private addresses, and the AF request sent by the AF network element may not be used to influence the correct session.

### SUMMARY

This application provides a communication method and a communication apparatus, so that when an NEF obtains an AF request, the NEF can determine a roaming type of a session corresponding to the AF request or a forwarding path of the AF request, and the AF request can be used to influence a correct session.

According to a first aspect, this application provides a communication method. The method may be applied to a first network exposure function NEF network element, and the method includes: receiving an AF request from an application function AF network element, where the AF request is used to influence a session of a terminal device, and the AF request from the AF network element includes a first address; obtaining a second address corresponding to the first address and an address domain corresponding to the second address; and sending the AF request to a unified data repository UDR network element.

According to the method described in the first aspect, the first NEF network element may determine, based on the address domain corresponding to the second address, a roaming type of a session corresponding to the AF request or a forwarding path of the AF request, so that the AF request can be used to influence a correct session.

In a possible implementation, the first address is a public network address obtained by performing network address translation NAT on the second address, and the second address is a private network address of the session of the terminal device.

In a possible implementation, a specific implementation of obtaining the second address corresponding to the first address and the address domain corresponding to the second address is: sending first information to a user plane function UPF network element, where the first information includes the first address, the UPF network element is a UPF network element that performs NAT on the second address, and the first information is used to request the second address and the address domain corresponding to the second address; and receiving second information from the UPF network element, where the second information includes the second address and the address domain corresponding to the second address.

In a possible implementation, the address domain corresponding to the second address does not belong to a public land mobile network PLMN to which the first NEF network element belongs.

In a possible implementation, the method further includes: determining, based on the address domain corresponding to the second address, a PLMN that allocates the second address to the session.

In a possible implementation, the AF request sent to the UDR network element includes first target information, and the first target information includes one or more of the following: the first address, the second address, the address domain corresponding to the second address, a subscription permanent identifier SUPI, a generic public subscription identifier GPSI, a home public land mobile network HPLMN identifier, a data network name DNN, single network slice selection assistance information S-NSSAI, an internal group identifier, and an external group identifier.

In a possible implementation, the AF request from the AF network element does not include the first target information.

In a possible implementation, the AF request sent to the UDR network element does not include the first address.

In a possible implementation, when the first target information includes one or more of the SUPI, the GPSI, and the internal group identifier, the method further includes: sending seventh information to a user data management UDM network element or a BSF network element belonging to a PLMN corresponding to the HPLMN identifier, where the seventh information includes the second address and/or the address domain corresponding to the second address, and the seventh information is used to request one or more of the SUPI, the GPSI, the internal group identifier, and the external group identifier; and receiving one or more of the SUPI, the GPSI, the internal group identifier, and the external group identifier from the UDM network element or the BSF network element.

In a possible implementation, before sending the AF request to the unified data repository UDR network element, the method further includes: sending storage request information to the UDR network element, where the storage request information includes the first target information; and receiving response information sent by the UDR network element for the storage request information, where the response information indicates that storage of the AF request is allowed.

In a possible implementation, the method further includes: sending third information to a network repository function NRF network element, where the third information includes the second address, and the third information is used to request to query an address of a binding support function BSF network element corresponding to the second address; and receiving fourth information from the NRF network element, where the fourth information indicates that the address of the BSF network element cannot be found.

In a possible implementation, the method further includes: sending fifth information to the BSF network element, where the fifth information includes the second address, and the fifth information is used to request to query an address of a policy control function PCF network element corresponding to the second address; and receiving sixth information from the BSF network element, where the sixth information indicates that the address of the PCF network element cannot be found.

According to a second aspect, this application provides a communication method. The method may be applied to a first network exposure function NEF network element, and the method includes: receiving an AF request from an application function AF network element, where the AF request is used to influence a session of a terminal device, the AF request from the AF network element includes a first identifier, and the first identifier is used to distinguish between public land mobile networks PLMNs; and sending the AF request to a unified data repository UDR network element.

According to the method described in the second aspect, the first NEF network element may determine, based on the first identifier, a roaming type of a session corresponding to the AF request or a forwarding path of the AF request, so that the AF request can be used to influence a correct session.

In a possible implementation, the first identifier is one of the following: a PLMN identifier, a home public land mobile network HPLMN identifier, and a virtual local area network VLAN identifier.

In a possible implementation, the AF request sent to the UDR network element includes first target information, and the first target information includes one or more of the following: a first address, a second address, an address domain corresponding to the second address, a subscription permanent identifier SUPI, a generic public subscription identifier GPSI, an HPLMN identifier, a data network name DNN, single network slice selection assistance information S-NSSAI, an internal group identifier, an external group identifier, and the first identifier.

In a possible implementation, the AF request from the AF network element does not include the first target information.

In a possible implementation, the first target information includes one or more of the SUPI, the GPSI, the internal group identifier, and the external group identifier, and the method further includes: sending seventh information to a user data management UDM network element or a BSF network element belonging to a PLMN corresponding to the HPLMN identifier, where the seventh information includes the second address and/or the address domain corresponding to the second address, and the seventh information is used to request one or more of the SUPI, the GPSI, the internal group identifier, and the external group identifier; and receiving one or more of the SUPI, the GPSI, the internal group identifier, and the external group identifier from the UDM or the BSF network element.

In a possible implementation, the first address is a public network address obtained by performing network address translation NAT on the second address, and the second address is a private network address of the session of the terminal device.

In a possible implementation, before sending the AF request to the unified data repository UDR network element, the method further includes: sending storage request information to the UDR network element, where the storage request information includes the first target information; and receiving response information sent by the UDR network element for the storage request information, where the response information indicates that storage of the AF request is allowed.

According to a third aspect, this application provides a communication method. The method may be applied to a second network exposure function NEF network element, and the method includes: receiving first subscription information sent by a first session management function SMF network element, where the first subscription information is used to request to subscribe to an application function AF request, the AF request is used to influence a session of a terminal device, the first subscription information includes second target information, and the second target information includes one or more of the following: a first address, a second address, an address domain corresponding to the second address, a subscription permanent identifier SUPI, a generic public subscription identifier GPSI, a home public land mobile network HPLMN identifier, a data network name DNN, single network slice selection assistance information S-NSSAI, an internal group identifier, and an external group identifier; sending second subscription information to a unified data repository UDR network element, where the second subscription information is used to request to subscribe to the AF request, and the second subscription information includes the second target information; receiving the AF request from the UDR network element, where the AF request from the UDR network element includes the second target information; and sending the AF request to the first SMF network element.

In a possible implementation, the second target information further includes a first identifier, and the first identifier is used to distinguish between PLMNs.

In a possible implementation, the first identifier is one of the following: a public land mobile network PLMN identifier, an HPLMN identifier, and a virtual local area network VLAN identifier.

In a possible implementation, the first address is a public network address obtained by performing network address translation NAT on the second address, and the second address is a private network address of the session of the terminal device.

According to a fourth aspect, this application provides a communication method. The method may be applied to a first session management function SMF network element, and the method includes: sending first subscription information to a second network exposure function NEF network element, where the first subscription information includes second target information, and the second target information includes one or more of the following: a first address, a second address, an address domain corresponding to the second address, a subscription permanent identifier SUPI, a generic public subscription identifier GPSI, a home public land mobile network HPLMN identifier, a data network name DNN, single network slice selection assistance information S-NSSA, an internal group identifier, and an external group identifier; and receiving an application function AF request sent by the second NEF network element, where the AF request is used to influence a session of a terminal device, and the AF request from the second NEF network element includes the second target information.

In a possible implementation, the second target information further includes a first identifier, and the first identifier is used to distinguish between public land mobile networks PLMNs.

In a possible implementation, the first identifier is one of the following: a PLMN identifier, an HPLMN identifier, and a virtual local area network VLAN identifier.

In a possible implementation, when the second target information includes one or more of the SUPI, the GPSI, the HPLMN identifier, the internal group identifier, and the external group identifier, the method further includes: receiving eighth information sent by a second SMF network element or a policy control function PCF network element, where the eighth information includes one or more of the SUPI, the GPSI, the HPLMN identifier, the internal group identifier, and the external group identifier.

In a possible implementation, the second SMF network element and the first SMF network element do not belong to a same PLMN.

In a possible implementation, the first address is a public network address obtained by performing network address translation NAT on the second address, and the second address is a private network address of the session of the terminal device.

According to a fifth aspect, this application provides a communication method. The method may be applied to a user plane function UPF network element, and the method includes: receiving first information sent by a first network exposure function NEF network element, where the first information includes a first address, the first address is a public network address obtained by performing network address translation NAT on a second address, the second address is a private network address of a session of a terminal device, and the first information is used to request the second address and an address domain corresponding to the second address; and sending second information to the first NEF network element, where the second information includes the second address and the address domain corresponding to the second address.

According to a sixth aspect, this application provides a communication method. The method may be applied to a unified data repository UDR network element, and the method includes: receiving second subscription information sent by a second NEF network element, where the second subscription information is used to request to subscribe to an AF request, the AF request is used to influence a session of a terminal device, the second subscription information includes second target information, and the second target information includes one or more of the following: a first address, a second address, an address domain corresponding to the second address, a subscription permanent identifier SUPI, a generic public subscription identifier GPSI, a home public land mobile network HPLMN identifier, a data network name DNN, single network slice selection assistance information S-NSSAI, an internal group identifier, and an external group identifier; receiving and storing the AF request from a first NEF network element, where the AF request includes first target information, and the first target information includes one or more of the following: the first address, the second address, the address domain corresponding to the second address, the SUPI, the GPSI, the HPLMN identifier, the DNN, the S-NSSA, the internal group identifier, and the external group identifier; and sending the AF request to the second NEF network element, where the AF request sent to the second NEF network element includes the second target information.

In a possible implementation, the second target information further includes a first identifier, the first target information further includes the first identifier, and the first identifier is used to distinguish between PLMNs.

In a possible implementation, the first identifier is one of the following: a public land mobile network PLMN identifier, an HPLMN identifier, and a virtual local area network VLAN identifier.

In a possible implementation, the first target information and the second target information include same information.

In a possible implementation, before storing the AF request from the first NEF network element, the method further includes: determining that the first target information is subscribed to by the second NEF network element.

In a possible implementation, before receiving and storing the AF request from the first NEF, the method further includes: receiving storage request information from the first NEF network element, where the storage request information includes the first target information, and the first target information is subscribed to by the second NEF network element; and sending response information for the storage request information to the first NEF network element, where the response information indicates that storage of the AF request is allowed.

In a possible implementation, the first address is a public network address obtained by performing network address translation NAT on the second address, and the second address is a private network address of the session of the terminal device.

According to a seventh aspect, this application provides a communication method. The method may be applied to a first session management function SMF network element, and the method includes: receiving one or more internal group identifiers sent by a second SMF network element; sending first subscription information to a second network exposure function NEF network element, where the first subscription information is used to request to subscribe to an AF request, the first subscription information includes second target information, and the second target information includes the one or more internal group identifiers; and receiving the AF request from the second NEF network element, where the AF request from the second NEF network element includes the second target information.

According to the method described in the seventh aspect, the first SMF network element can obtain the internal group identifier, so that the first SMF network element can subscribe to an AF request indexed by using a group identifier, and the AF request indexed by using the group identifier may be subsequently sent to the first SMF to influence a corresponding session.

In a possible implementation, before receiving the one or more internal group identifiers sent by the second SMF network element, the method further includes: sending internal group identifier request information to the second SMF network element.

In a possible implementation, a specific implementation of receiving the one or more internal group identifiers sent by the second SMF network element is: receiving, in a process of establishing an edge computing home routed with session breakout HR-SBO session, the one or more internal group identifiers sent by the second SMF network element.

According to an eighth aspect, this application provides a communication method. The method may be applied to a first network exposure function NEF network element, and the method includes: receiving an AF request sent by an application function AF network element, where the AF request is used to influence a session of a terminal device, the AF request sent by the AF network element includes one or more external group identifiers, and a first public land mobile network PLMN to which the one or more external group identifiers belong is not a PLMN in which the first NEF network element is located; sending ninth information to a user data management UDM network element belonging to the first PLMN, where the ninth information is used to request one or more internal group identifiers corresponding to the one or more external group identifiers; receiving tenth information sent by the UDM network element, where the tenth information includes the one or more internal group identifiers; and sending the AF request to a unified data repository UDR network element.

In a possible implementation, the method further includes: determining, based on a domain identifier in the one or more external group identifiers, the first PLMN to which the one or more external group identifiers belong.

In a possible implementation, a specific implementation of sending the ninth information to the UDM network element corresponding to the first PLMN is: sending, via a fourth NEF network element belonging to the first PLMN, the ninth information to the UDM network element belonging to the first PLMN. A specific implementation of receiving the tenth information sent by the UDM network element is: receiving, via the fourth NEF network element, the tenth information from the UDM network element.

In a possible implementation, the AF request sent to the UDR includes first target information, and the first target information includes the one or more internal group identifiers.

According to a ninth aspect, this application provides a communication apparatus. The communication apparatus may be an NEF network element, may be an apparatus in an NEF network element, or may be an apparatus that can be used in combination with an NEF network element. The communication apparatus may alternatively be a chip system. The communication apparatus may perform the method according to the first aspect, the second aspect, the third aspect, or the eighth aspect. A function of the communication apparatus may be implemented by hardware, or may be implemented by hardware executing corresponding software. The hardware or the software includes one or more units or modules corresponding to the foregoing function. The unit or the module may be software and/or hardware.

According to a tenth aspect, this application provides a communication apparatus. The communication apparatus may be an NEF network element, may be an apparatus in an NEF network element, or may be an apparatus that can be used in combination with an NEF network element. The communication apparatus may alternatively be a chip system. The communication apparatus may perform the method according to the first aspect, the second aspect, the third aspect, or the eighth aspect. A function of the communication apparatus may be implemented by hardware, or may be implemented by hardware executing corresponding software. The hardware or the software includes one or more units or modules corresponding to the foregoing function. The unit or the module may be software and/or hardware.

According to an eleventh aspect, this application provides a communication apparatus. The communication apparatus may be an SMF network element, may be an apparatus in an SMF network element, or may be an apparatus that can be used in combination with an SMF network element. The communication apparatus may alternatively be a chip system. The communication apparatus may perform the method according to the fourth aspect or the seventh aspect. A function of the communication apparatus may be implemented by hardware, or may be implemented by hardware executing corresponding software. The hardware or the software includes one or more units or modules corresponding to the foregoing function. The unit or the module may be software and/or hardware.

According to a twelfth aspect, this application provides a communication apparatus. The communication apparatus may be a UPF network element, may be an apparatus in a UPF network element, or may be an apparatus that can be used in combination with a UPF network element. The communication apparatus may alternatively be a chip system. The communication apparatus may perform the method according to the fifth aspect. A function of the communication apparatus may be implemented by hardware, or may be implemented by hardware executing corresponding software. The hardware or the software includes one or more units or modules corresponding to the foregoing function. The unit or the module may be software and/or hardware.

According to a thirteenth aspect, this application provides a communication apparatus. The communication apparatus may be a UPF network element, may be an apparatus in a UPF network element, or may be an apparatus that can be used in combination with a UPF network element. The communication apparatus may alternatively be a chip system. The communication apparatus may perform the method according to the fifth aspect. A function of the communication apparatus may be implemented by hardware, or may be implemented by hardware executing corresponding software. The hardware or the software includes one or more units or modules corresponding to the foregoing function. The unit or the module may be software and/or hardware.

According to a fourteenth aspect, this application provides a communication apparatus. The communication apparatus may be a UDR network element, may be an apparatus in a UDR network element, or may be an apparatus that can be used in combination with a UDR network element. The communication apparatus may alternatively be a chip system. The communication apparatus may perform the method according to the sixth aspect. A function of the communication apparatus may be implemented by hardware, or may be implemented by hardware executing corresponding software. The hardware or the software includes one or more units or modules corresponding to the foregoing function. The unit or the module may be software and/or hardware.

According to a fifteenth aspect, this application provides a communication apparatus. The communication apparatus includes a processor, and when the processor invokes a computer program in a memory, the method according to any one of the first aspect to the eighth aspect is performed.

According to a sixteenth aspect, this application provides a communication apparatus. The communication apparatus includes a processor and a memory, and the processor is coupled to the memory. The processor is configured to implement the method according to any one of the first aspect to the eighth aspect.

According to a seventeenth aspect, this application provides a communication apparatus. The communication apparatus includes a processor, a memory, and a transceiver, and the processor is coupled to the memory. The transceiver is configured to receive and send data, and the processor is configured to implement the method according to any one of the first aspect to the eighth aspect.

According to an eighteenth aspect, this application provides a communication apparatus. The communication apparatus includes a processor and an interface, and the processor is coupled to the interface. The interface is configured to receive or output a signal, and the processor is configured to execute code instructions, to perform the method according to any one of the first aspect to the eighth aspect.

According to a nineteenth aspect, this application provides a computer-readable storage medium. The storage medium stores a computer program or instructions, and when the computer program or the instructions are executed by a communication apparatus, the method according to any one of the first aspect to the eighth aspect is implemented.

According to a twentieth aspect, this application provides a computer program product including instructions. When a communication apparatus reads and executes the instructions, the communication apparatus is enabled to perform the method according to any one of the first aspect to the eighth aspect.

According to a twenty-first aspect, this application provides a communication system, including a communication apparatus configured to perform the methods according to the first aspect, the third aspect, the fourth aspect, the fifth aspect, and the sixth aspect, including a communication apparatus configured to perform the methods according to the second aspect, the third aspect, the fourth aspect, the fifth aspect, and the sixth aspect, or including a communication apparatus configured to perform the methods according to the seventh aspect and the eighth aspect.

### BRIEF DESCRIPTION OF DRAWINGS

FIG. 1 is a diagram of a network system architecture according to an embodiment of this application;
FIG. 2 is a diagram of an architecture of a communication system in an HR-SBO roaming scenario according to an embodiment of this application;
FIG. 3 to FIG. 8A and FIG. 8B each are a schematic flowchart of a communication method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a chip according to an embodiment of this application.

### DESCRIPTION OF EMBODIMENTS

In the specification, claims, and accompanying drawings of this application, terms "first", "second", and the like are intended to distinguish between different objects but do not indicate a particular order. In addition, terms "including" and "having" and any variants thereof are intended to cover a non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

"Embodiments" mentioned in this specification mean that specific features, structures, or characteristics described in combination with embodiments may be included in at least one embodiment of this application. The phrase shown in various positions in the specification does not necessarily mean a same embodiment, and is not an independent or optional embodiment exclusive from another embodiment. It is explicitly and implicitly understood by a person skilled in the art that embodiments described in this specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural.

To better understand this application, the following describes several system architectures provided in embodiments of this application.

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a new radio (new radio, NR) system, a 5th generation (5th generation, 5G) communication system like a 3rd generation partnership (3rd generation partnership project, 3GPP) service-based network architecture (service-based architecture, SBA), or a communication system evolved after 5G like a 6th generation (6th generation, 6G) communication system.

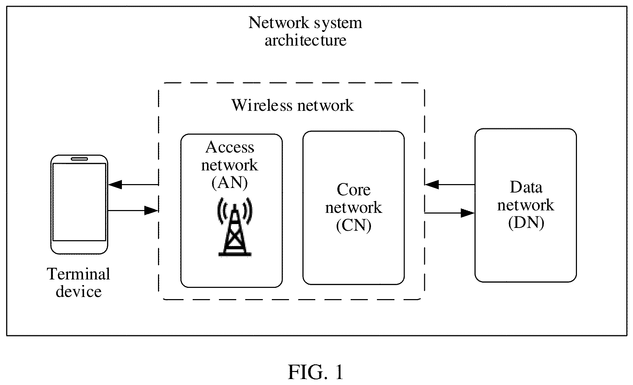

FIG. 1 is a diagram of a network system architecture according to an embodiment of this application. As shown in FIG. 1, a terminal device may access a wireless network, to obtain a service of an external network (for example, a data network (data network, DN)) through the wireless network or communicate with another device, for example, another terminal device, through the wireless network. The wireless network includes a (radio) access network ((radio) access network, (R)AN) and a core network (core network, CN). The (R)AN (described as a RAN below) is configured to connect the terminal device to the wireless network, and the CN is configured to manage the terminal device and provide a gateway for communicating with the DN. The following separately describes in detail the terminal device, the RAN, the CN, and the DN in the system architecture in FIG. 1.

### I. Terminal device

The terminal device includes a device that provides voice and/or data connectivity for a user. For example, the terminal device is a device having a wireless transceiver function, and may be deployed on land, including an indoor device or an outdoor device, a handheld device, a wearable device, or a vehicle-mounted device, may be deployed on water (for example, on a ship), or may be deployed in the air (for example, on an airplane, a balloon, or a satellite). The terminal device may be a mobile phone (mobile phone), a set top box (Set Top Box, STB), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE agent, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform). The terminal device in this application may be a 5G terminal, or may be a 6G terminal. This is not limited in this application.

### II. RAN

The RAN may include one or more radio access network elements (or access network devices). Interfaces between the radio access network elements and the terminal device may be Uu interfaces (or referred to as air interfaces). It is clear that, in communication evolved after 5G, names of these interfaces may remain unchanged, or may be replaced with other names. This is not limited in this application.

The radio access network element is a node or a device that connects the terminal device to the wireless network. The radio access network element includes, for example, but is not limited to, a next generation NodeB (next generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a home base station ((home evolved NodeB, HeNB) or (home NodeB, HNB)), a baseband unit (baseband unit, BBU), a transmitting and receiving point (transmitting and receiving point, TRP), a transmission point (transmission point, TP), a mobile switching center, or a device that functions as a base station in device-to-device (Device-to-Device, D2D), vehicle-to-everything (vehicle-to-everything, V2X), and machine-to-machine (machine-to-machine, M2M) communication; or may include a central unit (central unit, CU) and a distributed unit (distributed unit, DU) in a cloud access network (cloud radio access network, C-RAN) system, a network device that is in a non-terrestrial network (non-terrestrial network, NTN) communication system and that may be deployed on a high-altitude platform or a satellite, or the like. This is not specifically limited in embodiments of this application. The RAN in this application may be a 5G RAN or a 6G RAN. This is not limited in this application.

### III. CN

The CN may include one or more network elements (which may be understood as a function network element (network function, NF) or a CN device).

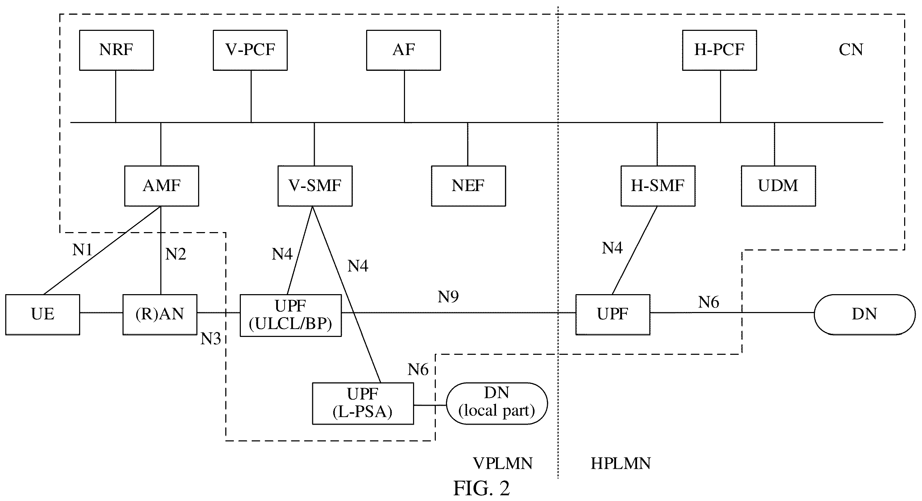

A CN architecture applicable to embodiments of this application may alternatively be shown in FIG. 2. The CN network elements mainly include a network exposure function (network exposure function, NEF) network element, an application function (application function, AF) network element, a session management function (session management function, SMF) network element, a user plane function (user plane function, UPF) network element, a policy control function (policy control function, PCF) network element, a unified data repository (unified data repository, UDR) network element, a binding support function (binding support function, BSF) network element, a network repository function (network repository function, NRF) network element, and a unified data management (unified data management, UDM) network element.

The NEF network element provides capability exposure of a 5G core network, and allow an external network element to interact with the 5G core network through the network element.

The AF network element may interact with another core network control plane, and provide a service. For example, the AF supports the following functions: influencing a session, accessing the NEF network element, and interacting with the PCF network element to perform policy control.

The SMF network element is mainly responsible for session management in a mobile network, for example, session establishment, modification, and release. Specific functions are, for example, allocating an IP address to a user and selecting a UPF that provides a packet forwarding function.

The UPF network element is mainly responsible for user packet processing, for example, forwarding and charging.

The PCF network element supports unified policy management on network behavior, provides a policy rule for a control plane function for execution, and obtains subscription-related information from the UDR to make a policy decision.

The UDR network element mainly provides a capability of storing subscription data, policy data, and capability exposure-related data.

The BSF network element is mainly responsible for storing PCF network element registration information, for PCF network element discovery and selection.

The NRF network element is mainly responsible for storing network element information of a home public land mobile network (home public land mobile network, HPLMN), for network element discovery.

The UDM network element is mainly responsible for performing subscription management, access authorization, authentication information generation, and the like on the user.

It should be noted that the CN network element may also be referred to as the function network element or the CN device. In the 5G communication system, function network elements may be names of the function network elements described above. In a communication system (for example, a 6G communication system) evolved after 5G, function network elements may still be the names of the function network elements described above, or may have other names. For example, in the 5G communication system, a user plane function may be the UPF. In the communication system (for example, the 6G communication system) evolved after 5G, a user plane function may still be the UPF, or may have another name. This is not limited in this application.

It should be further noted that, in the 5G communication system, functions implemented by the function network elements may be independent. In the communication system (for example, the 6G communication system) evolved after 5G, the function network elements may still be in an independent state, or functions of the plurality of function network elements described above may be implemented by an integrated function network element. For example, in the 5G communication system, a user plane-related function is implemented by the UPF, and a unified policy management-related function is implemented by the PCF. In the communication system (for example, the 6G communication system) evolved after 5G, a user plane-related function may still be implemented by the UPF, and a unified policy management-related function may still be implemented by the PCF, or both the user plane-related function and the unified policy management-related function may be implemented by an integrated function network element. This is not limited in this application.

### IV. DN

The DN may also be referred to as a packet data network (packet data network, PDN), and is a network outside an operator network. The operator network may access a plurality of DNs. Application servers corresponding to a plurality of services may be deployed on the DN, to provide the plurality of services for the terminal device.

In Release 18, a new roaming scenario is proposed, and is referred to as an edge computing home routed with session breakout (Home Routed with Session Breakout, HR-SBO) roaming scenario. FIG. 2 shows an architecture of a communication system corresponding to the HR-SBO roaming scenario. The method provided in embodiments of this application may be applicable to the communication architecture. The UE may access an edge environment (Edge Hosting environment, EHE) via a VPLMN.

An SMF belonging to the VPLMN is a visited SMF (visited SMF, V-SMF) that serves the user when the user roams, and a PCF belonging to the VPLMN is a visited PCF (visited PCF, V-PCF) that serves the user when the user roams. An SMF belonging to the HPLMN is a home SMF (home SMF, H-SMF) that serves the user when the user roams. A PCF belonging to the HPLMN is a home PCF (home PCF, H-PCF) that serves the user when the user roams. In a session, a UPF directly connected to the DN through N6 is referred to as a protocol data unit session anchor (Protocol Data Unit Session Anchor, PSA), and an anchor UPF for local breakout is referred to as a local PDU session anchor (local PSA, L-PSA). A UPF serving as a breakout point is referred to as a branching point (branching point, BP) or an uplink classifier (uplink classifier, ULCL). Different from a non-roaming edge computing scenario, to maintain control of the HPLMN on a local breakout service, the H-SMF indicates, to the V-SMF during session establishment, a service that is authorized to be accessed in the VPLMN.

An AF request is used to influence a session of the UE in time in an edge computing (Edge Computing, EC) scenario, so as to provide a better service for the UE. A manner in which the AF request is used to influence the session may be requesting to establish or modify a user plane path of the UE, or may be providing new application service deployment information.

In the HR-SBO scenario, a network exposure function (network exposure function, NEF) network element in the VPLMN may serve an HR-SBO roaming session as a visited NEF (Visited NEF, V-NEF) network element. In addition, the NEF network element may also serve a non-roaming session in the VPLMN or a local breakout (local breakout, LBO) roaming session as a (home) NEF network element. Therefore, when the NEF network element receives the AF request, the NEF network element needs to distinguish between session types influenced by using the received AF request for a UE IP, to determine an action after the AF request is received, so that the AF request can be used to influence a correct session.

Network address translation (Network Address Translation, NAT) may be used to translate a private network (Internet Protocol Address, IP) address into a public network address. If a session of the terminal device accesses a network based on a public network address obtained by performing NAT on a private IP address, when the NEF network element obtains an AF request for the session of the UE, the AF request includes the public network address that is of the session of the UE and that is obtained through NAT translation. In this case, the NEF network element cannot determine a roaming type corresponding to the session of the terminal device, and cannot determine how to process the AF request subsequently. Particularly, when the UE IP that the AF request is for is an address obtained through NAT translation, it is more difficult for the NEF network element to determine a roaming type of a session due to overlapping between private addresses, and the AF request sent by the AF network element may not be used to influence the correct session.

To enable the AF request to influence the correct session, embodiments of this application provide a communication method and a communication apparatus. The following further describes in detail the communication method and the communication apparatus provided in embodiments of this application.

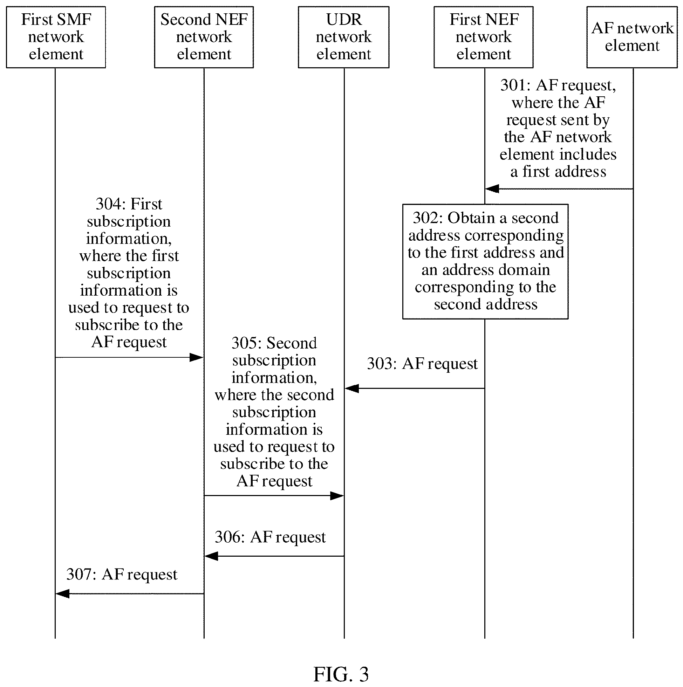

FIG. 3 is a schematic flowchart of a communication method according to an embodiment of this application. As shown in FIG. 3, the communication method includes the following step 301 to step 307. The method shown in FIG. 3 may be performed by a first SMF network element, a second NEF network element, a UDR network element, a first NEF network element, and an AF network element. Alternatively, the method shown in FIG. 3 may be performed by devices or chips having functions of a first SMF network element, a second NEF network element, a UDR network element, a first NEF network element, and an AF network element. This is not limited in this embodiment of this application. In FIG. 3, an example in which the method is performed by the first SMF network element, the second NEF network element, the UDR network element, the first NEF network element, and the AF network element is used for description. The first SMF network element in the embodiment in FIG. 3 may be the V-SMF network element shown in FIG. 2. The UDR network element and the AF network element in the embodiment in FIG. 3 may be the UDR network element and the AF network element shown in FIG. 2. The first NEF network element and the second NEF network element in the embodiment in FIG. 3 may be the NEF network element shown in FIG. 2. The first NEF network element and the second NEF network element may be a same NEF network element, or may be two different NEF network elements. In FIG. 3, descriptions are provided with the first NEF network element and the second NEF network element being two different NEF network elements.

301: The AF network element sends an AF request to the first NEF network element. Correspondingly, the first NEF network element receives the AF request from the AF network element, where the AF request sent by the AF network element includes a first address.

In this embodiment of this application, the AF request is used to influence a session of a terminal device. A manner in which the AF request is used to influence the session may be indicating to change traffic of the session, providing application service deployment information, or the like. A specific manner in which the AF request is used to influence the session is not limited in this embodiment of this application. The first NEF network element described in this embodiment of this application is applicable to any NEF network element that can receive AF requests for roaming and non-roaming. To be specific, when an AF request is used to influence a PDU session, the first NEF may serve as a home NEF (home NEF, H-NEF) for some sessions influenced by using the AF request, for example, a non-roaming session, and may serve as a visited NEF (visited NEF, V-NEF) for some other sessions, for example, an HR-SBO session. For an AF request for different sessions, the first NEF network element needs to forward the AF request in different manners, to influence a correct session.

An implementation in which the AF request sent by the AF network element includes the first address is that a target UE identifier (target UE Identifier) in the AF request includes the first address. The first address is a public network address obtained by performing NAT on a private network address of the session of the terminal device. Optionally, the first address may be specifically a public internet protocol (internet protocol, IP) address of the terminal device, or may be specifically a public IP address and a port number (port number) of the terminal device.

That the first address included in the AF request is the public network address obtained by performing NAT on the private network address of the session of the terminal device may be discovered by the first NEF network element through determining. An implementation of determining by the first NEF network element is: The first NEF network element configures a public IP (IP segment) that may be used for NAT and that is in a PLMN to which the first NEF network element belongs, and if the first address included in the received AF request belongs to the IP segment, the first NEF network element determines that the first address is the public network address obtained by performing NAT on the private network address of the session of the terminal device.

302: The first NEF network element obtains a second address corresponding to the first address and an address domain corresponding to the second address.

In this embodiment of this application, that the first address corresponds to the second address means that the first address is an address obtained by performing NAT on the second address. The first NEF network element may obtain the corresponding second address based on the first address and a correspondence between the first address and the second address. In a possible implementation, the second address is the private network address (private IP) of the session of the terminal device. That the second address is the private network address of the session of the terminal device specifically means that an IP address allocated by a 5G core network to the terminal device is a private network address. That the first NEF network element obtains the second address corresponding to the first address means that the first NEF network element obtains the second address by providing the first address. For example, the first NEF network element provides the first address for a UPF network element by using a Nupf_GetPrivateUEIPaddr service. After receiving the first address, the UPF network element returns, to the first NEF network element, a UE IP address that is uniquely identified by the first address provided by the first NEF and that is obtained through NAT, namely, the second address. In addition, there may be another correspondence between the first address and the second address. For example, the second address is an address used in the 5G core network, the first address is an address used outside the 5G core network, and the first address and the second address are used to mark a same session. This is not limited in this embodiment of this application.

The address domain corresponding to the second address is an address domain to which the second address belongs. For example, the address domain includes a plurality of addresses, and the second address is one of the addresses. The address domain corresponding to the second address may indicate a roaming type of the session corresponding to the AF request, indicate a forwarding path of the AF request, or serve as a basis for the first NEF network element to determine a roaming type of the session corresponding to the AF request. Optionally, the second address is a private IP address of the session of the terminal device, and the address domain corresponding to the second address is an IP domain (domain).

A specific implementation in which the first NEF network element obtains the second address corresponding to the first address and the address domain corresponding to the second address may be as follows.

S31: The first NEF network element sends first information to the UPF network element. Correspondingly, the UPF network element receives the first information from the first NEF network element. The first information includes the first address. Optionally, the first information is used to request the second address and the address domain corresponding to the second address. The UPF network element is a network element that performs NAT on the second address.

S32: The UPF network element sends second information to the first NEF network element. Correspondingly, the first NEF network element receives the second information from the UPF network element, where the second information includes the second address and the address domain corresponding to the second address.

A manner in which the first NEF network element determines the UPF network element that performs NAT on the second address may be specifically: The first NEF network element sends query information to an NRF network element, where the query information is used to request an address of the UPF network element that performs NAT on the second address, and the query information carries the first address. After receiving the query information, the NRF network element sends the address of the corresponding UPF network element to the first NEF network element. The NRF network element may locally configure a correspondence between the address and the UPF network element, or the UPF network element may send the address of the UPF network element, the second address, and the first address to the NRF network element when performing NAT on the second address.

A specific implementation in which the first NEF network element determines, based on the address domain corresponding to the second address, the roaming type of the session corresponding to the AF request or the forwarding path of the session of the AF request may be: The first NEF network element configures a correspondence between each address domain and each PLMN, and the first NEF network element determines, based on the address domain corresponding to the second address, a PLMN that allocates the second address to the session. If the address domain corresponding to the second address does not belong to the PLMN to which the first NEF network element belongs, the first NEF network element may determine that the roaming type corresponding to the session is a first roaming type. One PLMN includes one or more address domains used to allocate an address to the terminal device. That the address domain corresponding to the second address does not belong to the PLMN to which the first NEF network element belongs may be understood as that the address domain corresponding to the second address is not one or more address domains included in the PLMN to which the first NEF network element belongs, or is not a subset of one or more address domains included in the PLMN to which the first NEF network element belongs.

In a communication system scenario corresponding to the first roaming type, a home PLMN of the session of the terminal device is different from a PLMN in which an edge environment accessed by the session of the terminal device is located. Optionally, the first roaming type is HR-SBO roaming. Optionally, when the PLMN that allocates the second address to the session is different from the PLMN in which the edge environment accessed by the session of the terminal device is located, it is determined that the session is an HR-SBO session.

Specifically, in HR-SBO roaming, as shown in FIG. 2, the UPF network element located in an HPLMN correspondingly allocates the second address to the session of the terminal device. The address domain corresponding to the second address belongs to an address domain of the HPLMN, and the first NEF network element is located in a VPLMN. Therefore, the address domain corresponding to the second address does not belong to the PLMN to which the first NEF network element belongs. Therefore, a PLMN in which the address domain corresponding to the second address is located is different from the PLMN in which the first NEF network element is located.

In a non-roaming scenario, the terminal device does not need to access a network via a VPLMN. Therefore, the UPF network element that allocates the second address to the session of the terminal device is located in an HPLMN, and the first NEF network element that receives the AF request for the session of the terminal device is also located in the HPLMN. Therefore, a PLMN in which the address domain corresponding to the second address is located is the same as the PLMN in which the first NEF network element is located.

In a local breakout (local breakout, LBO) roaming scenario, the UPF network element is located in a VPLMN, and an HPLMN does not include the UPF network element. Therefore, the UPF network element that allocates the second address to the session of the terminal device is located in the VPLMN, and the first NEF network element that receives the session of the terminal device is also located in the VPLMN. Therefore, a PLMN in which the address domain corresponding to the second address is located is the same as the PLMN in which the first NEF network element is located.

Based on this implementation, the first NEF network element may determine, based on the address domain corresponding to the second address, the roaming type of the session corresponding to the AF request or the forwarding path of the AF request, so that the AF request can be used to influence the correct session.

In the foregoing implementation, that the roaming type of the session corresponding to the AF request is determined based on the address domain corresponding to the second address, and then a subsequent processing method for the AF request is determined based on the roaming type corresponding to the session is described. It should be additionally noted that the first NEF network element may process the AF request in another manner based on the address domain corresponding to the second address. This is not limited in this embodiment of this application. For example, the first NEF network element may alternatively not need to determine the roaming type corresponding to the session. To be specific, if the address domain corresponding to the second address does not belong to the PLMN to which the first NEF network element belongs or the address domain corresponding to the second address belongs to another PLMN, the first NEF network element performs a same action as that described above after that the roaming type of the session is the first roaming type is determined, that is, continues to perform step 303.

The first NEF network element may alternatively determine, in another manner, the roaming type of the session corresponding to the AF request or the forwarding path of the AF request. A specific implementation is as follows.

In a possible implementation, the first NEF network element sends third information to the NRF network element, where the third information includes the second address, and the third information is used to request to query an address of a BSF network element corresponding to the second address. The first NEF network element receives fourth information from the NRF network element, where the fourth information indicates that the address of the BSF cannot be found.

In the HR-SBO roaming, because the second address is allocated by a network element located in the HPLMN, and the first NEF that receives the AF request for the session of the terminal device is located in the VPLMN, the first NEF network element sends the third information to the NRF network element in the VPLMN to request to query the address of the BSF corresponding to the second address, and the address of the BSF network element in the HPLMN cannot be found.

In another possible implementation, the first NEF network element sends fifth information to a BSF network element, where the fifth information includes the second address, and the fifth information is used to request to query an address of a PCF corresponding to the second address. The first NEF network element receives sixth information from the BSF network element, where the sixth information indicates that the address of the PCF cannot be found.

In the HR-SBO roaming, because the second address is allocated by a network element located in the HPLMN, and the first NEF that receives the AF request for the session of the terminal device is located in the VPLMN, the first NEF network element sends the fifth information to the PCF network element in the VPLMN to request to query the address of the PCF network element corresponding to the second address, and the address of the PCF network element in the HPLMN cannot be found. In this case, an address of the BSF network element may be locally configured by the NEF network element.

Based on the foregoing two described implementations, the first NEF network element may determine the roaming type of the session corresponding to the AF request or the forwarding path of the AF request, so that the AF request can be used to influence the correct session.

In a possible implementation, as described in step S31 and step S32, the first information sent by the first NEF network element may further specifically indicate to request the IP domain corresponding to the second address and/or an address of an SMF network element corresponding to the second address, and the second information returned by the UPF network element may further specifically include the IP domain corresponding to the second address and/or the address of the SMF network element corresponding to the second address.

If the UPF stores an address of an SMF network element corresponding to an address of the session, the UPF may find the address of the SMF network element corresponding to the second address. When the second information includes the address of the SMF network element corresponding to the second address, the first NEF network element may directly forward the received AF request to the SMF network element corresponding to the second address. Based on this implementation, the SMF can receive the AF request more quickly.

303: The first NEF network element sends the AF request to a UDR network element. Correspondingly, the UDR network element receives and stores the AF request.

In this embodiment of this application, the AF request sent by the first NEF network element to the UDR network element may further include first target information. The first target information includes one or more of the following: the first address, the second address, the address domain corresponding to the second address, a subscription permanent identifier (subscription permanent identifier, SUPI), a generic public subscription identifier (generic public subscription identifier, GPSI), an HPLMN identifier, a data network name (data network name, DNN), single network slice selection assistance information (single network slice selection assistance information, S-NSSAI), an internal group identifier (Internal Group ID), and an external group identifier (External Group ID). The HPLMN identifier may be determined based on the address domain corresponding to the second address. The first target information may be understood as a data key. When the UDR network element determines that a network element subscribes to the AF request corresponding to the first target information, the UDR network element forwards the AF request. The first target information may indicate a target session influenced by using the AF request, and may also be used to identify information stored in the UDR. For example, during subscription to the UDR network element, when the first target information is used, content (for example, the AF request) stored by using the same first target information may be obtained.

In a possible implementation, when the first target information includes one or more of the SUPI, the GPSI, the internal group identifier, and the external group identifier, the first NEF network element sends seventh information to a UDM network element or a BSF network element belonging to a PLMN corresponding to the HPLMN identifier. The seventh information includes the second address, and the seventh information is used to request one or more of the SUPI, the GPSI, the internal group identifier, and the external group identifier. Optionally, the seventh information may further include the address domain corresponding to the second address. After the UDM network element or the BSF network element receives the seventh information, the UDM network element or the BSF network element sends one or more of the SUPI, the GPSI, the internal group identifier, and the external group identifier to the first NEF network element. Based on this implementation, each network element may subscribe to the AF request by using a plurality of parameters, so that the AF request can be used to influence the correct session.

Specifically, the first NEF network element sends, via a third NEF network element, the seventh information to the UDM network element or the BSF network element belonging to the PLMN corresponding to the HPLMN identifier, and the third NEF network element is an H-NEF network element. Correspondingly, the UDM network element or the BSF network element also returns one or more of the SUPI, the GPSI, the internal group identifier, and the external group identifier to the first NEF network element via the third NEF. A manner in which the first NEF network element exchanges information with the UDM network element or the BSF network element in the PLMN corresponding to the HPLMN identifier (for example, via the third NEF network element) is not limited in this embodiment of this application.

Specifically, an implementation in which the first NEF network element obtains one or more of the SUPI, the GPSI, the internal group identifier, and the external group identifier via the UDM network element is: The first NEF network element first determines, based on the address domain of the second address, an HPLMN corresponding to the session, and queries, based on the HPLMN, an address of a third NEF network element corresponding to the HPLMN from a visited NRF (visited NRF, V-NRF)/or locally configures an address of a third NEF network element corresponding to the HPLMN. The V-NRF network element queries the address of the third NEF network element via a home NRF (home NRF, H-NRF). After the address of the third NEF network element is found, the first NEF network element queries one or more of the SUPI, the GPSI, the internal group identifier, and the external group identifier from the third NEF network element by invoking an Nnef_UEId_Get interface. After receiving the second address, the third NEF queries or locally configures an address of the UDM network element via an H-BSF network element or the H-NRF network element. After the address of the UDM network element is found, the second address is sent to the UDM network element. After receiving the second address, the UDM network element returns one or more of the SUPI, the GPSI, the internal group identifier, and the external group identifier to the third NEF network element. After receiving one or more of the SUPI, the GPSI, the internal group identifier, and the external group identifier, the H-NEF network element forwards the one or more of the SUPI, the GPSI, the internal group identifier, and the external group identifier to the first NEF network element.

In this embodiment of this application, in the AF request sent by the first NEF network element to the UDR network element and the AF request sent by the AF network element to the first NEF network element, information indicating how to influence the session is the same, but other information may be different. For example, information indicating the target session may be different. In a possible implementation, the target UE identifier included in the AF request sent by the AF network element to the first NEF network element includes the first address, and the data key included in the AF request sent by the first NEF network element to the UDR network element includes the SUPI (the SUPI is a SUPI corresponding to the first address). Both the target UE identifier and the data key have a function of indicating the target session.

This implementation is specifically that the AF request sent by the AF network element to the first NEF network element does not include the first target information. That the AF request sent by the AF network element to the first NEF network element does not include the first target information may also be understood as that the first target information is newly added to the AF request sent by the first NEF network element to the UDR network element, and the AF request sent by the AF network element does not include the first target information. Optionally, the AF request sent by the first NEF network element to the UDR network element does not include the first address. For example, when the first target information includes the SUPI, optionally, the first target information may further include the DNN, the S-NSSAI, or the like, the AF request sent by the AF network element to the first NEF network element does not include the first target information, that is, does not include the SUPI. In this implementation, because the first address included in the AF request sent by the AF network element to the first NEF network element is a public network address obtained by performing NAT on the second address, a plurality of terminal devices may share a same public network address. However, the AF request may be for a session of only one terminal device, and a session of another terminal device does not need to be influenced. The first NEF network element obtains the SUPI from the corresponding UDM network element or BSF network element via the third NEF network element, and adds the SUPI to the AF request sent to the UDR network element. Optionally, the first address included in the AF request may be further deleted, so that the session of the terminal device that the AF request is for can be accurately indicated, and this helps the AF request be used to influence the correct session.

Before the UDR network element stores the AF request, security of storage space of the UDR may be improved in the following two implementations.

Manner 1: Before the UDR network element receives the AF request from the first NEF network element, the method further includes: The first NEF network element sends storage request information to the UDR network element, where the storage request information includes the first target information. The UDR network element determines, based on the first target information, whether a network element has subscribed to the AF request corresponding to the first target information. If a network element has subscribed to the AF request corresponding to the first target information, the UDR network element sends response information to the first NEF network element for the storage request information, where the response information indicates that storage of the AF request is allowed. If no network element has subscribed to the first target information, the UDR network element rejects receiving the AF request corresponding to the first target information.

Manner 2: The UDR network element receives the AF request from the first NEF network element, and the UDR network element determines, based on the first target information, whether a network element has subscribed to the AF request corresponding to the first target information. If a network element has subscribed to the AF request corresponding to the first target information, the UDR network element stores the AF request. If no network element has subscribed to the AF request corresponding to the first target information, the UDR network element discards the AF request.

According to the method described above, the UDR network element stores only the AF request corresponding to the first target information that has been subscribed to, so that UDR storage space occupation caused by an unauthorized attack can be avoided, and the security of the storage space of the UDR can be improved.

304: The first SMF network element sends first subscription information to the second NEF network element. Correspondingly, the second NEF network element receives the first subscription information from the first SMF network element, where the first subscription information is used to request to subscribe to the AF request.

In this embodiment of this application, the first subscription information indicates the first SMF network element to subscribe to the AF request from the second NEF network element. The first subscription message includes second target information, and the second target information includes one or more of the following: the first address, the second address, the IP domain corresponding to the second address, the SUPI, the GPSI, the HPLMN identifier, the DNN, the S-NSSA, the internal group identifier, and the external group identifier. When the second NEF network element receives the AF request corresponding to the second target information, the second NEF network element forwards the AF request to the first SMF network element. Optionally, the first SMF network element may send the first subscription information to the second NEF network element during establishment of the HR-SBO session.

In a possible implementation, if the second target information includes one or more of the SUPI, the GPSI, the HPLMN identifier, the internal group identifier, and the external group identifier, the method further includes: The first SMF network element receives eighth information sent by a second SMF network element or the PCF network element, where the eighth information includes one or more of the SUPI, the GPSI, the HPLMN identifier, the internal group identifier, and the external group identifier. The second SMF network element and the first SMF network element are not in a same PLMN.

It should be additionally noted that before the first SMF network element receives the eighth information sent by the second SMF network element or the PCF network element, the first SMF network element may send query information for one or more of the SUPI, the GPSI, the HPLMN identifier, the internal group identifier, and the external group identifier to the second SMF network element or the PCF network element during establishment of the HR-SBO session. After finding the query information for one or more of the SUPI, the GPSI, the HPLMN identifier, the internal group identifier, and the external group identifier from the UDM network element, the second SMF network element or the PCF network element returns one or more of the SUPI, the GPSI, the HPLMN identifier, the internal group identifier, and the external group identifier to the first SMF.

Based on this implementation, each network element can subscribe to the AF request by using a plurality of parameters, so that accuracy of influencing the session by using the AF request can be improved.

305: The second NEF network element sends second subscription information to the UDR network element. Correspondingly, the UDR network element receives the second subscription information from the second NEF network element, where the second subscription information is used to request to subscribe to the AF request.

In this embodiment of this application, the second subscription information indicates the second NEF network element to subscribe to the AF request from the UDR network element. The second subscription message includes the second target information. When the storage space of the UDR network element stores the AF request corresponding to the second target information, the UDR network element forwards the AF request to the second NEF network element.

It should be additionally noted that step 304 and step 305 only need to be performed before step 306. FIG. 3 shows that step 304 and step 305 may be performed before step 303. It should be further noted that step 304 and step 305 may alternatively be performed after step 303. This is not limited in this embodiment of this application.

306: The UDR network element sends the AF request to the second NEF network element. Correspondingly, the second NEF network element receives the AF request from the UDR network element.

In this embodiment of this application, when the first target information is the same as the second target information, the UDR network element sends the AF request to the second NEF network element, and the AF request sent by the UDR network element to the second NEF network element includes the second target information.

That the first target information is the same as the second target information may be understood as that all parameter information included in the first target information is the same as that included in the second target information, and content corresponding to each piece of parameter information in the first target information is the same as that corresponding to each piece of parameter information in the second target information.

For example, it is assumed that the first target information includes the SUPI, the DNN, and the S-NSSAI, and the second target information also includes the SUPI, the DNN, and the S-NSSAI. It may be learned that all parameter information included in the first target information is the same as that included in the second target information. That the content corresponding to each piece of parameter information in the first target information is the same as that corresponding to each piece of parameter information in the second target information means that the SUPI in the first target information is the same as the SUPI in the second target information, the DNN in the first target information is the same as the DNN in the second target information, and the DNN in the first target information is the same as the DNN in the second target information.

For another example, the first target information includes the SUPI, and the second target information also includes the SUPI. That all parameter information included in the first target information is the same as that included in the second target information, and that the content corresponding to each piece of parameter information in the first target information is the same as that corresponding to each piece of parameter information in the second target information mean that the S-NSSAI in the first target information is the same as the S-NSSAI in the second target information.

Alternatively, that the first target information is the same as the second target information may be understood as that the first target information and the second target information include some same parameter information, and content corresponding to each piece of parameter information in the same parameter information in the first target information and the second target information is the same.

For example, it is assumed that the first target information includes the SUPI, the DNN, and the S-NSSAI, and the second target information includes the SUPI and the DNN. That the first target information and the second target information include some same parameter information means that both the first target information and the second target information include the SUPI and the DNN. That the content corresponding to each piece of parameter information in the same parameter information in the first target information and the second target information is the same means that the SUPI in the first target information is the same as the SUPI in the second target information, and the DNN in the first target information is the same as the DNN in the second target information.

307: The second NEF network element sends the AF request to the first SMF network element. Correspondingly, the first SMF network element receives the AF request from the second NEF network element.

In this embodiment of this application, after receiving the AF request, the first SMF network element influences the session of the terminal device based on an indication of the AF request, for example, establishes or modifies the session, or performs a corresponding action on the session of the terminal device. According to the method described in this embodiment of this application, the first NEF network element can determine, based on the address domain corresponding to the second address, the roaming type of the session corresponding to the AF request or the forwarding path of the AF request, so that the AF request is forwarded to the corresponding first SMF network element, and the AF request can be used to influence the correct session.

In FIG. 3, descriptions are provided with the first NEF network element and the second NEF network element being two different NEF network elements. The first NEF network element and the second NEF network element may alternatively be a same NEF network element. A reason is that when sending the AF request, the AF network element selects an NEF network element as a transmit end, and when subscribing to the AF request, the first SMF network element also selects an NEF network element as a transmit end. The NEF network element selected by the AF network element and the NEF network element selected by the first SMF network element may be a same NEF network element, or may be different NEF network elements.

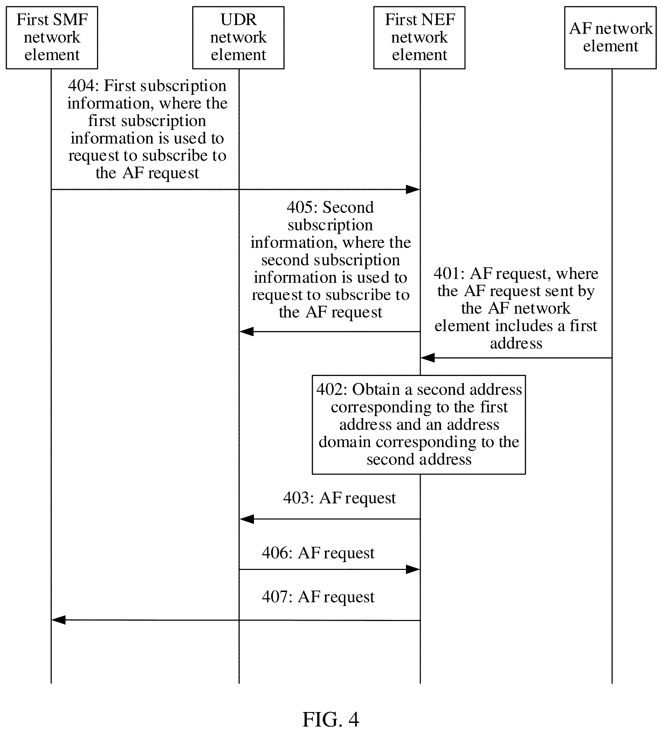

FIG. 4 shows a specific implementation procedure of the communication method when the first NEF network element and the second NEF network element are the same network element. Both the first NEF network element and the second NEF network element are referred to as the first NEF network element, and step 401 to step 407 are included.

401: The AF network element sends the AF request to the first NEF network element. Correspondingly, the first NEF network element receives the AF request from the AF network element, where the AF request sent by the AF network element includes the first address.

402: The first NEF network element obtains the second address corresponding to the first address and the address domain corresponding to the second address.

403: The first NEF network element sends the AF request to the UDR network element. Correspondingly, the UDR network element receives and stores the AF request.

404: The first SMF network element sends the first subscription information to the first NEF network element. Correspondingly, the first NEF network element receives the first subscription information from the first SMF network element, where the first subscription information is used to request to subscribe to the AF request.

405: The first NEF network element sends the second subscription information to the UDR network element. Correspondingly, the UDR network element receives the second subscription information from the first NEF network element, where the second subscription information is used to request to subscribe to the AF request.

In this embodiment of this application, step 404 and step 405 only need to be performed before step 406. FIG. 4 shows that step 404 and step 405 are performed before step 401. It should be further noted that step 404 and step 405 may alternatively be performed after step 401, step 402, or step 403. This is not limited in this application.

406: The UDR network element sends the AF request to the first NEF network element. Correspondingly, the first NEF network element receives the AF request from the UDR network element.

407: The first NEF network element sends the AF request to the first SMF network element. Correspondingly, the first SMF network element receives the AF request from the first NEF network element.

A specific implementation of step 401 to step 407 is the same as that of step 301 to step 307. Details are not described herein again in this embodiment of this application.

To enable the AF request to influence the correct session, embodiments of this application further provide a communication method and a communication apparatus. The following further describes in detail the communication method and the communication apparatus provided in embodiments of this application.

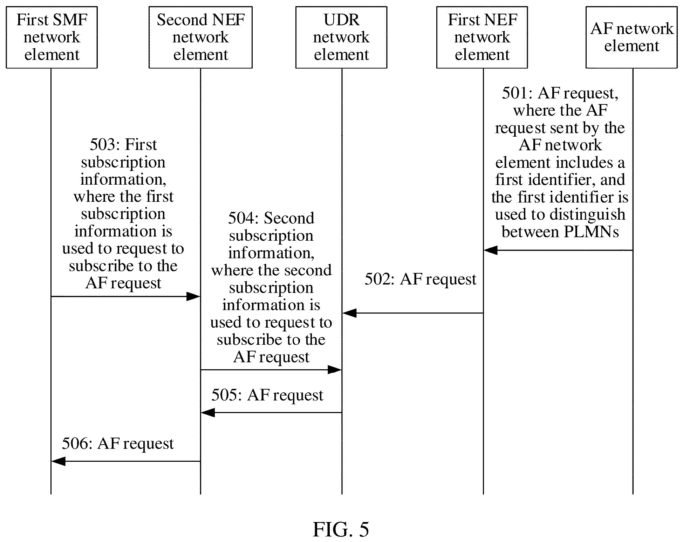

FIG. 5 is a schematic flowchart of a communication method according to an embodiment of this application. As shown in FIG. 5, the communication method includes the following step 501 to step 506. The method shown in FIG. 5 may be performed by a first SMF network element, a second NEF network element, a UDR network element, a first NEF network element, and an AF network element. Alternatively, the method shown in FIG. 5 may be performed by devices or chips having functions of a first SMF network element, a second NEF network element, a UDR network element, a first NEF network element, and an AF network element. This is not limited in this embodiment of this application. In FIG. 5, an example in which the method is performed by the first SMF network element, the second NEF network element, the UDR network element, the first NEF network element, and the AF network element is used for description. The first SMF network element in the embodiment in FIG. 5 may be the V-SMF network element shown in FIG. 2. The UDR network element and the AF network element in the embodiment in FIG. 5 may be the UDR network element and the AF network element shown in FIG. 2. The first NEF network element and the second NEF network element in the embodiment in FIG. 5 may be the NEF network element shown in FIG. 2. The first NEF network element and the second NEF network element may be a same NEF network element, or may be two different NEF network elements. In FIG. 5, descriptions are provided with the first NEF network element and the second NEF network element being two different NEF network elements.

501: The AF network element sends an AF request to the first NEF network element. Correspondingly, the first NEF network element receives the AF request from the AF network element, where the AF request sent by the AF network element includes a first identifier, and the first identifier is used to distinguish between PLMNs.

In this embodiment of this application, the AF request is used to influence a session of a terminal device. A manner in which the AF request is used to influence the session may be indicating to change traffic by using the session, providing application service deployment information, or the like. A specific manner in which the AF request is used to influence the session is not limited in this embodiment of this application. The first NEF network element described in this embodiment of this application is applicable to any NEF network element that can receive AF requests for roaming and non-roaming. To be specific, when an AF request is used to influence a PDU session, the first NEF may serve as a home NEF (home NEF, H-NEF) for some sessions influenced by using the AF request, for example, a non-roaming session, and may serve as a visited NEF (visited NEF, V-NEF) for some other sessions, for example, an HR-SBO session. For an AF request for different sessions, the first NEF network element needs to forward the AF request in different manners, to influence a correct session.

The first identifier may be an identifier like a PLMN identifier, an HPLMN identifier, or a virtual local area network (Virtual Local Area Network, VLAN) identifier. The first identifier may alternatively be a newly defined identifier used to distinguish between PLMNs. The first identifier and the AF request may be included in a same message, or may be included in different messages. The identifier may also be a feature of the message of the AF request. For example, the VLAN identifier may be a feature corresponding to the message of the AF request, instead of a separate information element. The first NEF network element may determine, based on the first identifier, whether a session corresponding to the AF request and the first NEF network element belong to a same PLMN, and if the session corresponding to the AF request and the first NEF network element do not belong to the same PLMN, the first NEF network element may determine that a roaming type corresponding to the session is a first roaming type. In a communication system scenario corresponding to the first roaming type, a UPF network element that allocates a second address to the session of the terminal device and an NEF network element that receives the AF request for the session of the terminal device do not belong to a same PLMN. Optionally, the first roaming type is HR-SBO roaming.

According to the method, the first NEF network element may determine, based on the first identifier, the roaming type of the session corresponding to the AF request or a forwarding path of the AF request, so that the AF request can be used to influence the correct session.

502: The first NEF network element sends the AF request to the UDR network element. Correspondingly, the UDR network element receives and stores the AF request.

In this embodiment of this application, the AF request sent by the first NEF network element to the UDR network element may further include first target information. The first target information includes one or more of the following: a first address, the second address, an address domain corresponding to the second address, a SUPI, a GPSI, an HPLMN identifier, a DNN, S-NSSAI, an internal group identifier, an external group identifier, and the first identifier. The first target information may be understood as a data key. When the UDR network element determines that a network element subscribes to the AF request corresponding to the first target information, the UDR network element forwards the AF request. The first target information may indicate a target session influenced by using the AF request, and may also be used to identify information stored in the UDR network element. For example, during subscription to the UDR, when the first target information is used, content (for example, the AF request) stored by using the same first target information may be obtained.

When the first target information includes the first address, because the AF request sent by the AF network element includes the first address, the first NEF network element may determine the first address based on the AF request sent by the AF network element. The first address is a public network address obtained by performing NAT on a private network address of the session of the terminal device. Optionally, the first address may be specifically a public IP of the terminal device, or may be specifically a public IP address and a port number of the terminal device.

That the first address included in the AF request is the public network address obtained by performing NAT on the private network address of the session of the terminal device may be discovered by the first NEF network element through determining. An implementation of determining by the first NEF network element is: The first NEF network element configures a public IP (IP segment) that may be used for NAT and that is in a PLMN to which the first NEF network element belongs, and if the first address included in the received AF request belongs to the IP segment, the first NEF network element determines that the first address is the public network address obtained by performing NAT on the private network address of the session of the terminal device.

When the first target information includes the second address corresponding to the first address and/or the address domain corresponding to the second address, that the first address corresponds to the second address means that the first address is an address obtained by performing NAT on the second address. The first NEF network element may obtain the corresponding second address based on the first address and a correspondence between the first address and the second address. In a possible implementation, the second address is the private network address (private IP) of the session of the terminal device. That the second address is the private network address of the session of the terminal device specifically means that an IP address allocated by a 5G core network to the terminal device is a private network address. That the first NEF network element obtains the second address corresponding to the first address means that the first NEF network element obtains the second address by providing the first address. For example, the first NEF network element provides the first address for the UPF network element by using a Nupf_GetPrivateUEIPaddr service. After receiving the first address, the UPF network element returns, to the first NEF network element, a UE IP address that is uniquely identified by the first address provided by the first NEF and that is obtained through NAT, namely, the second address. In addition, there may be another correspondence between the first address and the second address. For example, the second address is an address used in the 5G core network, the first address is an address used outside the 5G core network, and the first address and the second address are used to mark a same session. This is not limited in this embodiment of this application. The address domain corresponding to the second address is an address domain to which the second address belongs. For example, the address domain includes a plurality of addresses, and the second address is one of the addresses. Optionally, the second address is a private IP address of the session of the terminal device, and the address domain corresponding to the second address is an IP domain. A specific implementation in which the first NEF network element obtains the second address and the address domain corresponding to the second address may be: The first NEF network element sends first information to the UPF network element. Correspondingly, the UPF network element receives the first information from the first NEF network element. Optionally, the first information is used to request the second address and the address domain corresponding to the second address, the first information includes the first address, and the UPF network element is a network element that performs NAT on the second address. The UPF network element sends second information to the first NEF network element. Correspondingly, the first NEF network element receives the second information from the UPF network element, where the second information includes the second address and the address domain corresponding to the second address.

A manner in which the first NEF network element determines the UPF network element that performs NAT on the second address may be specifically: The first NEF network element sends query information to an NRF network element, where the query information is used to request an address of the UPF network element that performs NAT on the second address, and the query information carries the first address. After receiving the query information, the NRF network element sends the address of the corresponding UPF network element to the first NEF network element. The NRF network element may locally configure a correspondence between the address and the UPF network element, or the UPF network element may send the address of the UPF network element, the second address, and the first address to the NRF network element when performing NAT on the second address.

When the first target information includes the HPLMN identifier, the HPLMN identifier may be determined based on the address domain corresponding to the second address.

When the first target information includes one or more of the SUPI, the GPSI, the internal group identifier, and the external group identifier, the first NEF network element sends seventh information to a UDM network element or a BSF network element belonging to a PLMN corresponding to the HPLMN identifier. The seventh information includes the second address, and the seventh information is used to request one or more of the SUPI, the GPSI, the internal group identifier, and the external group identifier. Optionally, the seventh information may further include the address domain corresponding to the second address. After the UDM network element or the BSF network element receives the seventh information, the UDM network element or the BSF network element sends one or more of the SUPI, the GPSI, the internal group identifier, and the external group identifier to the first NEF network element.

Based on the implementation described above, each network element may subscribe to the AF request by using a plurality of parameters, so that the AF request can be used to influence the correct session.

Optionally, the first NEF network element sends, via a third NEF network element, the seventh information to the UDM network element or the BSF network element belonging to the PLMN corresponding to the HPLMN identifier, and the third NEF network element is an H-NEF network element. Correspondingly, the UDM network element or the BSF network element also returns one or more of the SUPI, the GPSI, the internal group identifier, and the external group identifier to the first NEF network element via the third NEF. A manner in which the first NEF network element exchanges information with the UDM network element or the BSF network element in the PLMN corresponding to the HPLMN identifier (for example, via the third NEF network element) is not limited in this embodiment of this application.

Specifically, an implementation in which the first NEF network element obtains one or more of the SUPI, the GPSI, the internal group identifier, and the external group identifier via the UDM network element is: The first NEF network element first determines, based on the address domain of the second address, an HPLMN corresponding to the session, and queries, based on the HPLMN, an address of the third NEF from a V-NRF. The V-NRF network element queries, via an H-NRF, or locally configures the address of the third NEF network element corresponding to the HPLMN. After the address of the third NEF network element is found, the first NEF network element queries one or more of the SUPI, the GPSI, the internal group identifier, and the external group identifier from the third NEF network element by invoking an Nnef_UEId_Get interface. After receiving the second address, the third NEF network element queries or locally configures an address of the UDM network element via an H-BSF network element or the H-NRF network element. After the address of the UDM network element is found, the second address is sent to the UDM network element. After receiving the second address, the UDM network element returns one or more of the SUPI, the GPSI, the internal group identifier, and the external group identifier to the third NEF network element. After receiving one or more of the SUPI, the GPSI, the internal group identifier, and the external group identifier, the H-NEF network element forwards the one or more of the SUPI, the GPSI, the internal group identifier, and the external group identifier to the first NEF network element.

In this embodiment of this application, in the AF request sent by the first NEF network element to the UDR network element and the AF request sent by the AF network element to the first NEF network element, information indicating how to influence the session is the same, but other information may be different. For example, information indicating the target session may be different. In a possible implementation, a target UE identifier included in the AF request sent by the AF network element to the first NEF network element includes the first address, and the data key included in the AF request sent by the first NEF network element to the UDR network element includes the SUPI (the SUPI is a SUPI corresponding to the first address). Both the target UE identifier and the data key have a function of indicating the target session.

This implementation is specifically that the AF request sent by the AF network element to the first NEF network element does not include the first target information. That the AF request sent by the AF network element to the first NEF network element does not include the first target information may also be understood as that the first target information is newly added to the AF request sent by the first NEF network element to the UDR network element, and the AF request sent by the AF network element does not include the first target information. Optionally, the AF request sent by the first NEF network element to the UDR network element does not include the first address. For example, when the first target information includes the SUPI, optionally, the first target information may further include the DNN, the S-NSSAI, or the like, the AF request sent by the AF network element to the first NEF network element does not include the first target information, that is, does not include the SUPI. In this implementation, because the first address included in the AF request sent by the AF network element to the first NEF network element is a public network address obtained by performing NAT on the second address, a plurality of terminal devices may share a same public network address. However, the AF request may be for a session of only one terminal device, and a session of another terminal device does not need to be influenced. The first NEF network element obtains the SUPI from the corresponding UDM network element or BSF network element via the third NEF network element, and adds the SUPI to the AF request sent to the UDR network element. Optionally, the first address included in the AF request may be further deleted, so that the session of the terminal device that the AF request is for can be accurately indicated, and this helps the AF request be used to influence the correct session.

Before the UDR network element stores the AF request, security of storage space of the UDR may be improved in the following two implementations.

Manner 1: Before the UDR network element receives the AF request from the first NEF network element, the method further includes: The first NEF network element sends storage request information to the UDR network element, where the storage request information includes the first target information. The UDR network element determines, based on the first target information, whether a network element has subscribed to the AF request corresponding to the first target information. If a network element has subscribed to the AF request corresponding to the first target information, the UDR network element sends response information to the first NEF network element for the storage request information, where the response information indicates that storage of the AF request is allowed. If no network element has subscribed to the first target information, the UDR network element rejects receiving the AF request corresponding to the first target information.

Manner 2: The UDR network element receives the AF request from the first NEF network element, and the UDR network element determines, based on the first target information, whether a network element has subscribed to the AF request corresponding to the first target information. If a network element has subscribed to the AF request corresponding to the first target information, the UDR network element stores the AF request. If no network element has subscribed to the AF request corresponding to the first target information, the UDR network element discards the AF request.

According to the method described above, the UDR network element stores only the AF request corresponding to the first target information that has been subscribed to, so that UDR storage space occupation caused by an unauthorized attack can be avoided, and the security of the storage space of the UDR can be improved.

503: The first SMF network element sends first subscription information to the second NEF network element. Correspondingly, the second NEF network element receives the first subscription information from the first SMF network element, where the first subscription information is used to request to subscribe to the AF request.

In this embodiment of this application, the first subscription information indicates the first SMF network element to subscribe to the AF request from the second NEF network element. The first subscription message includes second target information, and the second target information includes one or more of the following: the first address, the second address, the IP domain corresponding to the second address, the SUPI, the GPSI, the HPLMN identifier, the DNN, the S-NSSA, the internal group identifier, the external group identifier, and the first identifier. When the second NEF network element receives the AF request corresponding to the first target information, the second NEF network element forwards the AF request to the first SMF network element. Optionally, the first SMF network element may send the first subscription information to the second NEF network element during establishment of the HR-SBO session.

In a possible implementation, if the second target information includes one or more of the SUPI, the GPSI, the HPLMN identifier, the internal group identifier, and the external group identifier, the method further includes: The first SMF network element receives eighth information sent by a second SMF network element or a PCF network element, where the eighth information includes one or more of the SUPI, the GPSI, the HPLMN identifier, the internal group identifier, and the external group identifier. The second SMF network element and the first SMF network element are not in a same PLMN.

It should be additionally noted that before the first SMF network element receives the eighth information sent by the second SMF network element or the PCF network element, the first SMF network element may send query information for one or more of the SUPI, the GPSI, the HPLMN identifier, the internal group identifier, and the external group identifier to the second SMF network element or the PCF network element during establishment of the HR-SBO session. After finding the query information for the one or more of the SUPI, the GPSI, the HPLMN identifier, the internal group identifier, and the external group identifier from the UDM network element, the second SMF network element or the PCF network element returns one or more of the SUPI, the GPSI, the HPLMN identifier, the internal group identifier, and the external group identifier to the first SMF.

Based on this implementation, each network element can subscribe to the AF request by using a plurality of parameters, so that accuracy of influencing the session by using the AF request can be improved.

504: The second NEF network element sends second subscription information to the UDR network element. Correspondingly, the UDR network element receives the second subscription information from the second NEF network element, where the second subscription information is used to request to subscribe to the AF request.

In this embodiment of this application, the second subscription information indicates the second NEF network element to subscribe to the AF request from the UDR network element. The second subscription message includes the second target information. When the storage space of the UDR network element stores the AF request corresponding to the second target information, the UDR network element forwards the AF request to the second NEF network element.

505: The UDR network element sends the AF request to the second NEF network element. Correspondingly, the second NEF network element receives the AF request from the UDR network element.

In this embodiment of this application, when the first target information is the same as the second target information, the UDR network element sends the AF request to the second NEF network element, and the AF request sent by the UDR network element to the second NEF network element includes the second target information.

That the first target information is the same as the second target information may be understood as that all parameter information included in the first target information is the same as that included in the second target information, and content corresponding to each piece of parameter information in the first target information is the same as that corresponding to each piece of parameter information in the second target information.

For example, it is assumed that the first target information includes the SUPI, the DNN, and the S-NSSAI, and the second target information also includes the SUPI, the DNN, and the S-NSSAI. It may be learned that all parameter information included in the first target information is the same as that included in the second target information. That the content corresponding to each piece of parameter information in the first target information is the same as that corresponding to each piece of parameter information in the second target information means that the SUPI in the first target information is the same as the SUPI in the second target information, the DNN in the first target information is the same as the DNN in the second target information, and the DNN in the first target information is the same as the DNN in the second target information.

For another example, the first target information includes the SUPI, and the second target information also includes the SUPI. That all parameter information included in the first target information is the same as that included in the second target information, and that the content corresponding to each piece of parameter information in the first target information is the same as that corresponding to each piece of parameter information in the second target information mean that the S-NSSAI in the first target information is the same as the S-NSSAI in the second target information.

Alternatively, that the first target information is the same as the second target information may be understood as that the first target information and the second target information include some same parameter information, and content corresponding to each piece of parameter information in the same parameter information in the first target information and the second target information is the same.

For example, it is assumed that the first target information includes the SUPI, the DNN, and the S-NSSAI, and the second target information includes the SUPI and the DNN. That the first target information and the second target information include some same parameter information means that both the first target information and the second target information include the SUPI and the DNN. That the content corresponding to each piece of parameter information in the same parameter information in the first target information and the second target information is the same means that the SUPI in the first target information is the same as the SUPI in the second target information, and the DNN in the first target information is the same as the DNN in the second target information.

506: The second NEF network element sends the AF request to the first SMF network element. Correspondingly, the first SMF network element receives the AF request from the second NEF network element.

In this embodiment of this application, after receiving the AF request, the first SMF network element influences the session of the terminal device based on an indication of the AF request, for example, establishes or modifies the session, or performs a corresponding action on the session of the terminal device. According to the method described in this embodiment of this application, the first NEF network element can determine, based on the first identifier, the roaming type of the session corresponding to the AF request or the forwarding path of the AF request, so that the AF request is forwarded to the corresponding first SMF network element, and the AF request can be used to influence the correct session.

In FIG. 5, descriptions are provided with the first NEF network element and the second NEF network element being two different NEF network elements. The first NEF network element and the second NEF network element may alternatively be a same NEF network element. A reason is that when sending the AF request, the AF network element selects an NEF network element as a transmit end, and when subscribing to the AF request, the first SMF network element also selects an NEF network element as a transmit end. The NEF network element selected by the AF network element and the NEF network element selected by the first SMF network element may be a same NEF network element, or may be different NEF network elements.

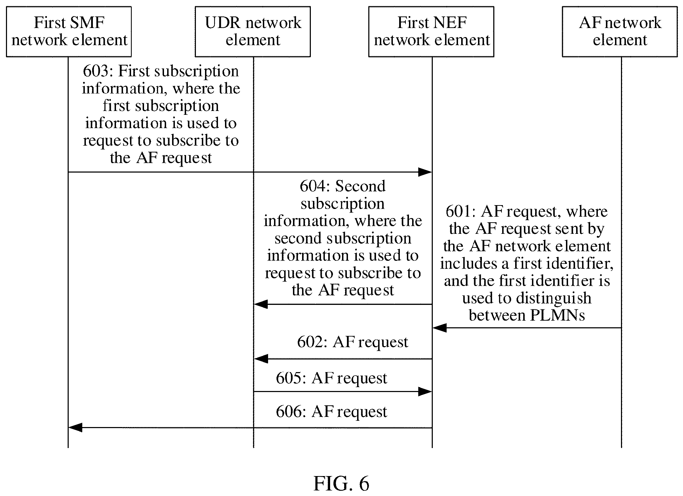

FIG. 6 shows a specific implementation procedure of the communication method when the first NEF network element and the second NEF network element are the same network element. Both the first NEF network element and the second NEF network element are referred to as the first NEF network element, and step 601 to step 606 are included.

601: The AF network element sends the AF request to the first NEF network element. Correspondingly, the first NEF network element receives the AF request from the AF network element, where the AF request sent by the AF network element includes the first identifier, and the first identifier is used to distinguish between PLMNs.

602: The first NEF network element sends the AF request to the UDR network element. Correspondingly, the UDR network element receives and stores the AF request.

603: The first SMF network element sends the first subscription information to the first NEF network element. Correspondingly, the first NEF network element receives the first subscription information from the first SMF network element, where the first subscription information is used to request to subscribe to the AF request.

604: The first NEF network element sends the second subscription information to the UDR network element. Correspondingly, the UDR network element receives the second subscription information from the first NEF network element, where the second subscription information is used to request to subscribe to the AF request.

In this embodiment of this application, step 603 and step 604 only need to be performed before step 605. FIG. 5 shows that step 603 and step 604 are performed before step 601. It should be further noted that step 603 and step 604 may alternatively be performed after step 601. This is not limited in this application.

605: The UDR network element sends the AF request to the first NEF network element. Correspondingly, the first NEF network element receives the AF request from the UDR network element.

606: The first NEF network element sends the AF request to the first SMF network element. Correspondingly, the first SMF network element receives the AF request from the first NEF network element.

A specific implementation of step 601 to step 606 is the same as that of step 501 to step 506. Details are not described herein again in this embodiment of this application.

Currently, a V-SMF in the HR-SBO session obtains the AF request by subscribing to the AF request from the V-NEF. The V-SMF obtains, from the V-NEF, an AF request indexed by using the data key. The AF request may be indexed by using a group identifier. However, because the V-SMF does not perceive a group identifier to which the HR-SBO session belongs, and one HR-SBO session may belong to a plurality of groups at the same time, the V-SMF cannot subscribe to the AF request indexed by using the group identifier. Consequently, the AF request indexed by using the group identifier cannot be sent to the V-SMF to influence the session.

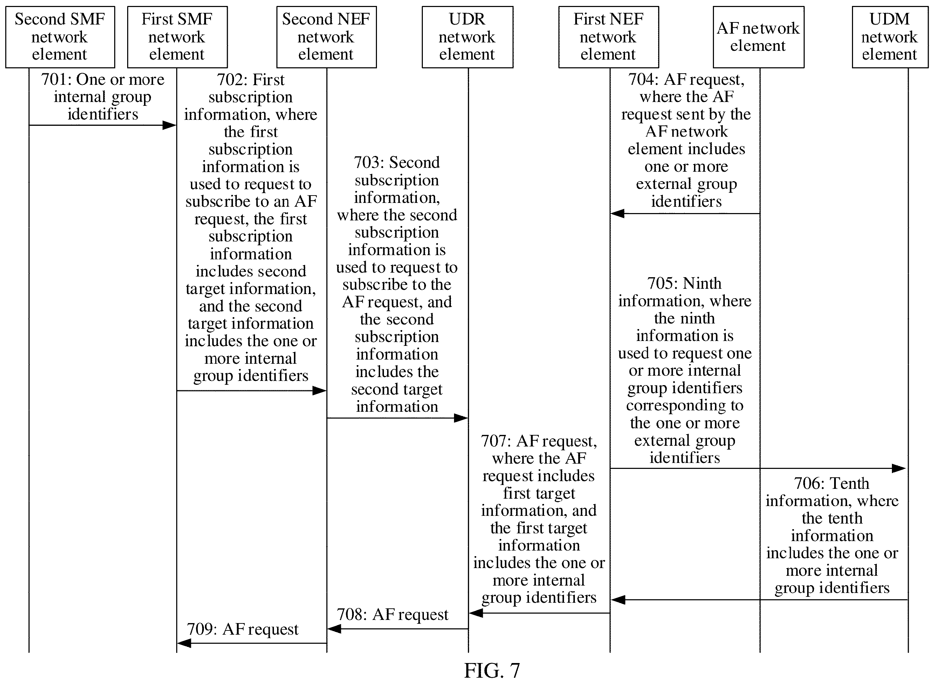

To enable an AF request indexed by using the internal group identifier to be forwarded to the V-SMF to influence the session, an embodiment of this application provides a communication method. FIG. 7 is a schematic flowchart of a communication method according to an embodiment of this application. As shown in FIG. 7, the communication method includes the following step 701 to step 709. The method shown in FIG. 7 may be performed by a first SMF network element, a second SMF network element, a second NEF network element, a UDR network element, a first NEF network element, an AF network element, and a UDM network element. Alternatively, the method shown in FIG. 7 may be performed by devices or chips having functions of a first SMF network element, a second SMF network element, a second NEF network element, a UDR network element, a first NEF network element, an AF network element, and a UDM network element. This is not limited in this embodiment of this application. In FIG. 7, an example in which the method is performed by the first SMF network element, the second SMF network element, the second NEF network element, the UDR network element, the first NEF network element, the AF network element, and the UDM network element is used for description. The first SMF network element in the embodiment in FIG. 7 may be the V-SMF network element shown in FIG. 2. The second SMF network element in the embodiment in FIG. 7 may be the H-SMF network element shown in FIG. 2. The UDR network element, the AF network element, and the UDM network element in the embodiment in FIG. 7 may be the UDR network element, the AF network element, and the UDM network element shown in FIG. 2. The first NEF network element and the second NEF network element in the embodiment in FIG. 7 may be the NEF network element shown in FIG. 2. The first NEF network element and the second NEF network element may be a same NEF network element, or may be two different NEF network elements. In FIG. 7, descriptions are provided with the first NEF network element and the second NEF network element being two different NEF network elements.

701: The second SMF network element sends one or more internal group identifiers to the first SMF network element. Correspondingly, the first SMF network element receives the one or more internal group identifiers from the second SMF network element.

In this embodiment of this application, the second SMF network element and the first SMF network element are network elements not belonging to a same PLMN. The first SMF network element may be a V-SMF network element, and the second SMF network element may be an H-SMF network element. That the second SMF network element sends the one or more internal group identifiers to the first SMF network element is that in a process of establishing an HR-SBO session, the second SMF network element obtains, via the UDM network element, identifiers of one or more internal groups to which the session belongs. Because one session may belong to one or more groups, the second SMF network element sends one or more internal group identifiers for the session.

Optionally, it may be considered by default that in the process of establishing the HR-SBO session, the second SMF network element actively sends the one or more internal group identifiers to the first SMF network element.

In an optional manner, in a session establishment process, if the second SMF network element authorizes a session as the HR-SBO session, the second SMF network element sends a group identifier to the first SMF network element.

Alternatively, in a process of establishing the HR-SBO session or modifying the HR-SBO session, the first SMF network element may send internal group identifier request information to the second SMF network element. After the second SMF network element receives the internal group identifier request information, the second SMF network element sends the one or more internal group identifiers to the first SMF network element. It should be additionally noted that, in the session establishment procedure, the second SMF network element first obtains, from the UDM network element, the identifiers of the one or more internal groups to which the session belongs, and then receives the internal group identifier request information from the first SMF network element.

According to the method, the first SMF network element can obtain the internal group identifier, so that the first SMF network element can subscribe to an AF request indexed by using the group identifier, and the AF request indexed by using the group identifier may be subsequently sent to the first SMF to influence a corresponding session.

702: The first SMF network element sends first subscription information to the second NEF network element. Correspondingly, the second NEF network element receives the first subscription information from the first SMF network element, where the first subscription information is used to request to subscribe to the AF request, the first subscription information includes second target information, and the second target information includes the one or more internal group identifiers.

In this embodiment of this application, the first subscription information indicates the first SMF network element to subscribe to the AF request from the second NEF network element. When the second NEF network element receives the AF request corresponding to the second target information, the second NEF network element forwards the AF request to the first SMF network element.

After receiving the one or more internal group identifiers, the first SMF network element may immediately send the first subscription information to the second NEF network element. Alternatively, the first SMF network element may not need to immediately send the first subscription information, but send the first subscription information to the second NEF network element at any moment in an entire life cycle of the HR-SBO session.

Optionally, the second target information further includes one or more of the following: a first address, a second address, an IP domain corresponding to the second address, a SUPI, a GPSI, an HPLMN identifier, a DNN, and S-NSSA.

The first address corresponds to the second address, and that the first address corresponds to the second address means that the first address is an address obtained by performing NAT on the second address. The first NEF network element may obtain the corresponding second address based on the first address and a correspondence between the first address and the second address. In a possible implementation, the second address is a private network address (private IP) of a session of a terminal device, and the first address is a public network address obtained by performing NAT on the private network address of the session of the terminal device. That the second address is the private network address of the session of the terminal device specifically means that an IP address allocated by a 5G core network to the terminal device is a private network address. That the first NEF network element obtains the second address corresponding to the first address means that the first NEF network element obtains the second address by providing the first address. For example, the first NEF network element provides the first address for a UPF network element by using a Nupf_GetPrivateUEIPaddr service. After receiving the first address, the UPF network element returns, to the first NEF network element, a UE IP address that is uniquely identified by the first address provided by the first NEF and that is obtained through NAT, namely, the second address. In addition, there may be another correspondence between the first address and the second address. For example, the second address is an address used in the 5G core network, the first address is an address used outside the 5G core network, and the first address and the second address are used to mark a same session. This is not limited in this embodiment of this application. An address domain corresponding to the second address is an address domain to which the second address belongs. For example, the address domain includes a plurality of addresses, and the second address is one of the addresses. Optionally, the first address may be specifically a public IP address of the terminal device, or may be specifically a public IP address and a port number of the terminal device. Optionally, the second address is a private IP address of the session of the terminal device, and the address domain corresponding to the second address is the IP domain.

703: The second NEF network element sends second subscription information to the UDR network element. Correspondingly, the UDR network element receives the second subscription information from the second NEF network element, where the second subscription information is used to request to subscribe to the AF request, and the second subscription information includes the second target information.

In this embodiment of this application, the second subscription information indicates the second NEF network element to subscribe to the AF request from the UDR network element. The second subscription message includes the second target information. When storage space of the UDR network element stores the AF request corresponding to the second target information, the UDR network element forwards the AF request to the second NEF network element.

Step 701 to step 703 may only need to be performed before step 708. FIG. 7 shows that step 701 to step 703 are performed before step 707. Step 701 to step 703 may alternatively be performed after step 707. This is not limited in this embodiment of this application.

704: The AF network element sends the AF request to the first NEF network element. Correspondingly, the first NEF network element receives the AF request from the AF network element, where the AF request sent by the AF network element includes one or more external group identifiers.

In this embodiment of this application, the AF request expects to influence a session of one or more internal group identifiers corresponding to the one or more external group identifiers. A manner in which the AF request is used to influence the session may be indicating to change traffic by using the session, providing application service deployment information, or the like. A specific manner in which the AF request is used to influence the session is not limited in this embodiment of this application. The first NEF network element is a V-NEF network element.

705: The first NEF network element sends ninth information to the UDM network element. Correspondingly, the UDM network element receives the ninth information from the first NEF network element, where the ninth information is used to request the one or more internal group identifiers corresponding to the one or more external group identifiers.

In this embodiment of this application, when the first SMF does not perceive the external group identifier, the first NEF needs to obtain the one or more internal group identifiers corresponding to the one or more external group identifiers. Therefore, the first NEF may determine, based on a domain identifier in the external group identifier, a first PLMN to which the external group identifier belongs, and then obtain the one or more internal group identifiers from a UDM network element belonging to the first PLMN.

A specific implementation in which the first NEF network element sends the ninth information to the UDM network element is: The first NEF network element sends, via a fourth NEF network element belonging to the first PLMN, the ninth information to the UDM network element belonging to the first PLMN, where the first PLMN to which the external group identifier belongs is determined based on the domain identifier in the external group identifier.

When the first SMF network element perceives the external group identifier, if the first NEF network element determines, based on the domain identifier in the external group identifier, that the first PLMN to which the external group identifier belongs is not a PLMN in which the first NEF network element is located, step 707 is directly performed. In another optional implementation, the first NEF network element does not need to determine the PLMN to which the external group identifier belongs, but directly sends the external group identifier to a UDM network element belonging to a same PLMN as the first NEF network element, to obtain the corresponding internal group identifier. If the corresponding internal group identifier fails to be obtained, step 707 is performed.

706: The UDM network element sends tenth information to the first NEF network element. Correspondingly, the first NEF network element receives the tenth information from the UDM network element, where the tenth information includes the one or more internal group identifiers.

A specific implementation in which the UDM network element sends the tenth information to the first NEF network element is sending the tenth information to the first NEF network element via the fourth NEF network element.

707: The first NEF network element sends the AF request to the UDR network element. Correspondingly, the UDR network element receives the AF request from the first NEF network element, where the AF request includes first target information, and the first target information includes the one or more internal group identifiers.

In this embodiment of this application, the first target information may be understood as a data key. When the UDR network element determines that a network element subscribes to the AF request corresponding to the first target information, the UDR network element forwards the AF request. The first target information may indicate a target session influenced by using the AF request, and may also be used to identify information stored in the UDR. For example, during subscription to the UDR network element, when the first target information is used, content (for example, the AF request) stored by using the same first target information may be obtained.

Optionally, the AF request sent by the first NEF network element to the UDR network element does not include the external group identifier.

Optionally, in addition to the internal group identifier, the first target information may further include one or more of the following: the first address, the second address, the IP domain corresponding to the second address, the SUPI, the GPSI, the HPLMN identifier, the DNN, and the S-NSSA.

In a possible implementation, when the first target information includes one or more of the SUPI, the GPSI, and the internal group identifier, the first NEF network element sends seventh information to a UDM network element or a BSF network element belonging to a PLMN corresponding to the HPLMN identifier. The seventh information includes the second address, and the seventh information is used to request one or more of the SUPI and the GPSI. Optionally, the seventh information may further include the address domain corresponding to the second address. After the UDM network element or the BSF network element receives the seventh information, the UDM network element or the BSF network element sends one or more of the SUPI and the GPSI to the first NEF network element. Based on this implementation, each network element may subscribe to the AF request by using a plurality of parameters, so that the AF request can be used to influence a correct session.

Optionally, the first NEF network element sends, via a third NEF network element, the seventh information to the UDM network element or the BSF network element belonging to the PLMN corresponding to the HPLMN identifier, and the third NEF network element is a home NEF (home NEF, H-NEF) network element. Correspondingly, the UDM network element or the BSF network element also returns one or more of the SUPI and the GPSI to the first NEF network element via the third NEF.

Specifically, an implementation in which the first NEF network element obtains one or more of the SUPI and the GPSI via the UDM network element is: The first NEF network element first determines, based on the address domain of the second address, an HPLMN corresponding to the session, and queries, based on the HPLMN, an address of a third NEF network element corresponding to the HPLMN from a V-NRF or locally configures an address of a third NEF network element corresponding to the HPLMN. The V-NRF network element queries the address of the third NEF network element via an H-NRF. After the address of the third NEF network element is found, the first NEF network element queries one or more of the SUPI and the GPSI from the third NEF network element by invoking an Nnef_UEId_Get interface. After receiving the second address, the third NEF queries or locally configures an address of the UDM network element via an H-BSF network element or the H-NRF network element. After the address of the UDM network element is found, the second address is sent to the UDM network element. After receiving the second address, the UDM network element returns one or more of the SUPI and the GPSI to the third NEF network element. After receiving the one or more of the SUPI and the GPSI, the H-NEF network element forwards the one or more of the SUPI and the GPSI to the first NEF network element. A manner in which the first NEF network element exchanges information with the UDM network element or the BSF network element in the PLMN corresponding to the HPLMN identifier (for example, via the third NEF network element) is not limited in this embodiment of this application.

Before the UDR network element stores the AF request, security of the storage space of the UDR may be improved in the following two implementations.

Manner 1: Before the UDR network element receives the AF request from the first NEF network element, the method further includes: The first NEF network element sends storage request information to the UDR network element, where the storage request information includes the first target information. The UDR network element determines, based on the first target information, whether a network element has subscribed to the AF request corresponding to the first target information. If a network element has subscribed to the AF request corresponding to the first target information, the UDR network element sends response information to the first NEF network element for the storage request information, where the response information indicates that storage of the AF request is allowed. If no network element has subscribed to the first target information, the UDR network element rejects receiving the AF request corresponding to the first target information.

Manner 2: The UDR network element receives the AF request from the first NEF network element, and the UDR network element determines, based on the first target information, whether a network element has subscribed to the AF request corresponding to the first target information. If a network element has subscribed to the AF request corresponding to the first target information, the UDR network element stores the AF request. If no network element has subscribed to the AF request corresponding to the first target information, the UDR network element discards the AF request.

According to the method described above, the UDR network element stores only the AF request corresponding to the first target information that has been subscribed to, so that UDR storage space occupation caused by an unauthorized attack can be avoided, and the security of the storage space of the UDR can be improved.

708: The UDR network element sends the AF request to the second NEF network element. Correspondingly, the first NEF network element receives the AF request from the UDR network element.

In this embodiment of this application, when the first target information is the same as the second target information, the UDR network element sends the AF request to the second NEF network element, and the AF request sent by the UDR network element to the second NEF network element includes the second target information.

That the first target information is the same as the second target information may be understood as that all parameter information included in the first target information is the same as that included in the second target information, and content corresponding to each piece of parameter information in the first target information is the same as that corresponding to each piece of parameter information in the second target information.

For example, it is assumed that the first target information includes the internal group identifier and the DNN, and the second target information also includes the internal group identifier and the DNN. It may be learned that all parameter information included in the first target information is the same as that included in the second target information. That the content corresponding to each piece of parameter information in the first target information is the same as that corresponding to each piece of parameter information in the second target information means that the internal group identifier in the first target information is the same as the internal group identifier in the second target information, and the DNN in the first target information is the same as the DNN in the second target information.

Alternatively, that the first target information is the same as the second target information may be understood as that the first target information and the second target information include some same parameter information, and content corresponding to each piece of parameter information in the same parameter information in the first target information and the second target information is the same.

For example, it is assumed that the first target information includes the internal group identifier and the DNN, and the second target information includes the internal group identifier. That the first target information and the second target information include some same parameter information means that both the first target information and the second target information include the internal group identifier. That the content corresponding to each piece of parameter information in the same parameter information in the first target information and the second target information is the same means that the internal group identifier in the first target information is the same as the internal group identifier in the second target information.

709: The second NEF network element sends the AF request to the first SMF network element. Correspondingly, the first SMF network element receives the AF request from the first NEF network element.

In this embodiment of this application, after receiving the AF request, the first SMF network element influences the session of the terminal device based on an indication of the AF request, for example, establishes or modifies the session, or performs a corresponding action on the session of the terminal device. According to the method described in this embodiment of this application, the first SMF network element can obtain the internal group identifier, so that the first SMF network element can subscribe to the AF request indexed by using the group identifier, and the AF request indexed by the AF network element by using the group identifier may be sent to the first SMF to influence the session.

In FIG. 7, descriptions are provided with the first NEF network element and the second NEF network element being two different NEF network elements. The first NEF network element and the second NEF network element may alternatively be a same NEF network element. A reason is that when sending the AF request, the AF network element selects an NEF network element as a transmit end, and when subscribing to the AF request, the first SMF network element also selects an NEF network element as a transmit end. The NEF network element selected by the AF network element and the NEF network element selected by the first SMF network element may be a same NEF network element, or may be different NEF network elements.

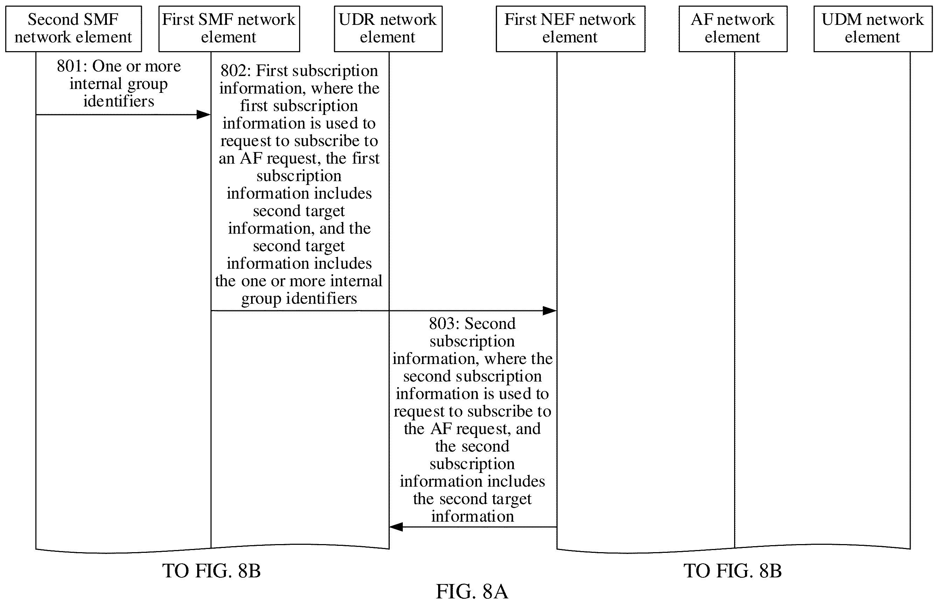

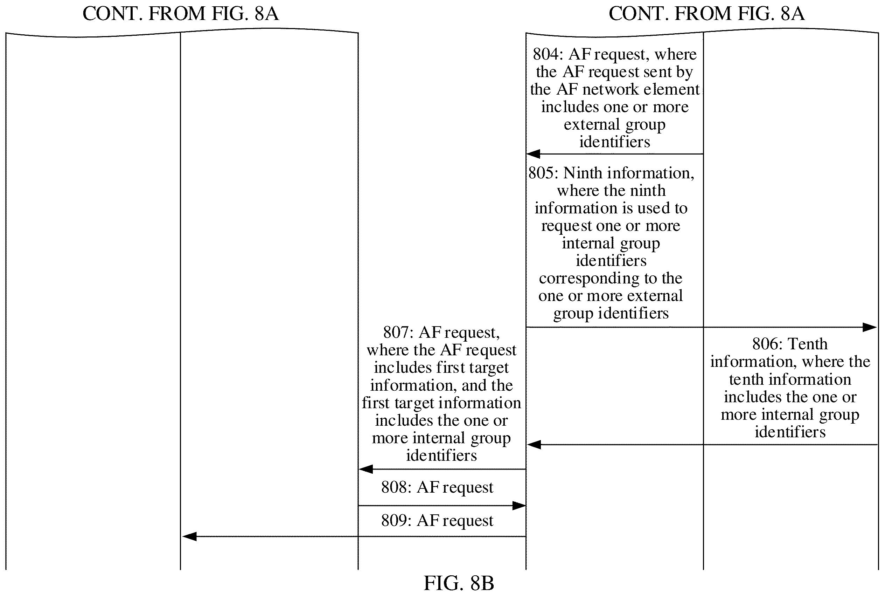

FIG. 8A and FIG. 8B show a specific implementation procedure of the communication method when the first NEF network element and the second NEF network element are the same network element. Both the first NEF network element and the second NEF network element are referred to as the first NEF network element, and step 801 to step 809 are included.

801: The second SMF network element sends the one or more internal group identifiers to the first SMF network element. Correspondingly, the first SMF network element receives the one or more internal group identifiers from the second SMF network element.

802: The first SMF network element sends the first subscription information to the first NEF network element. Correspondingly, the second NEF network element receives the first subscription information from the first SMF network element, where the first subscription information is used to request to subscribe to the AF request, the first subscription information includes the second target information, and the second target information includes the one or more internal group identifiers.

803: The first NEF network element sends the second subscription information to the UDR network element. Correspondingly, the UDR network element receives the second subscription information from the second NEF network element, where the second subscription information is used to request to subscribe to the AF request, and the second subscription information includes the second target information.

Step 801 to step 803 may only need to be performed before step 808. FIG. 7 shows that step 801 to step 803 are performed before step 807. Step 801 to step 803 may alternatively be performed after step 807. This is not limited in this embodiment of this application.

804: The AF network element sends the AF request to the first NEF network element. Correspondingly, the first NEF network element receives the AF request from the AF network element, where the AF request sent by the AF network element includes the one or more external group identifiers.

805: The first NEF network element sends the ninth information to the UDM network element. Correspondingly, the UDM network element receives the ninth information from the first NEF network element, where the ninth information is used to request the one or more internal group identifiers corresponding to the one or more external group identifiers.

806: The UDM network element sends the tenth information to the first NEF network element. Correspondingly, the first NEF network element receives the tenth information from the UDM network element, where the tenth information includes the one or more internal group identifiers.

807: The first NEF network element sends the AF request to the UDR network element. Correspondingly, the UDR network element receives the AF request from the first NEF network element, where the AF request includes the first target information, and the first target information includes the one or more internal group identifiers.

808: The UDR network element sends the AF request to the first NEF network element. Correspondingly, the first NEF network element receives the AF request from the UDR network element.

809: The first NEF network element sends the AF request to the first SMF network element. Correspondingly, the first SMF network element receives the AF request from the first NEF network element.

A specific implementation of step 801 to step 809 is the same as that of step 701 to step 709. Details are not described herein again in this embodiment of this application.

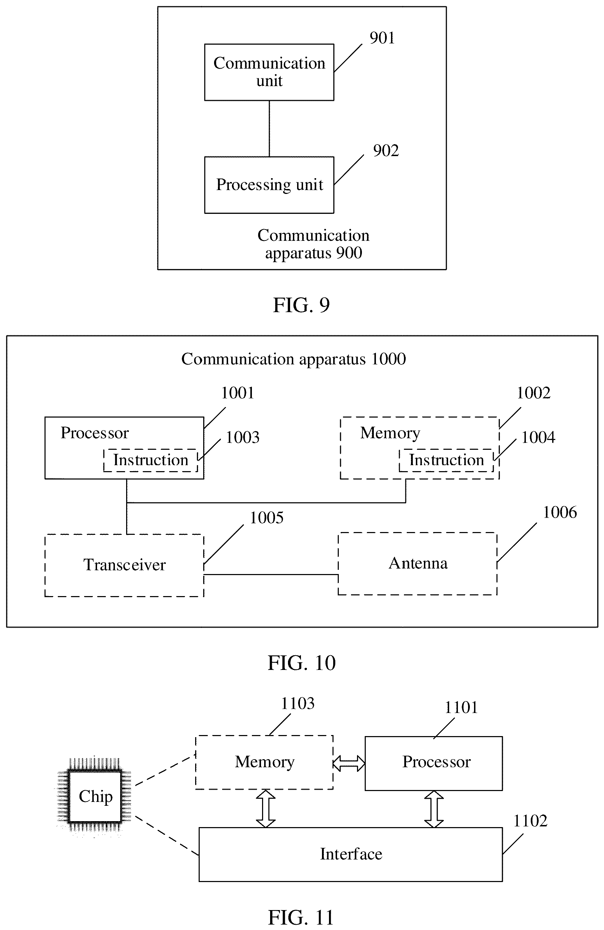

FIG. 9 is a diagram of a structure of a communication apparatus according to an embodiment of this application. The communication apparatus shown in FIG. 9 may be configured to perform some or all functions of the first NEF network element, the second NEF network element, the first SMF network element, the UPF network element, or the UDR network element in the methods shown in FIG. 3 to FIG. 8A and FIG. 8B. The apparatus may be a first NEF network element, a second NEF network element, a first SMF network element, a UPF network element, or a UDR network element, may be an apparatus in a first NEF network element, a second NEF network element, a first SMF network element, a UPF network element, or a UDR network element, or may be an apparatus that can be used in combination with a first NEF network element, a second NEF network element, a first SMF network element, a UPF network element, or a UDR network element. The communication apparatus may alternatively be a chip system. The communication apparatus shown in FIG. 9 may include a communication unit 901 and a processing unit 902. The processing unit 902 is configured to perform data processing. The communication unit 901 is configured to communicate with another device. The communication unit 901 is integrated with a receiving unit and a sending unit. The communication unit 901 may also be referred to as a transceiver unit. Alternatively, the communication unit 901 may be split into a receiving unit and a sending unit. The processing unit 902 and the communication unit 901 below are similar, and details are not described below again.

The communication apparatus 900 may be configured to perform a function of the first NEF network element in the foregoing method embodiments corresponding to FIG. 3 to FIG. 8A and FIG. 8B.

When the communication apparatus 900 is used for the function of the first NEF network element in the method embodiment corresponding to FIG. 3 or FIG. 4, the communication unit 901 is configured to receive an AF request from an application function AF network element, where the AF request is used to influence a session of a terminal device, and the AF request from the AF network element includes a first address. The communication unit 901 is further configured to obtain a second address corresponding to the first address and an address domain corresponding to the second address. The communication unit 901 is further configured to send the AF request to a unified data repository UDR network element.

In a possible implementation, the first address is a public network address obtained by performing network address translation NAT on the second address, and the second address is a private network address of the session of the terminal device.

In a possible implementation, when obtaining the second address corresponding to the first address and the address domain corresponding to the second address, the communication unit 901 is specifically configured to: send first information to a user plane function UPF network element, where the first information includes the first address, the UPF network element is a UPF network element that performs NAT on the second address, and the first information is used to request the second address and the address domain corresponding to the second address; and receive second information from the UPF network element, where the second information includes the second address and the address domain corresponding to the second address.

In a possible implementation, the address domain corresponding to the second address does not belong to a public land mobile network PLMN to which the first NEF network element belongs.

In a possible implementation, the processing unit 902 is configured to: determine, based on the address domain corresponding to the second address, a PLMN that allocates the second address to the session.

In a possible implementation, the AF request sent to the UDR network element includes first target information, and the first target information includes one or more of the following: the first address, the second address, the address domain corresponding to the second address, a subscription permanent identifier SUPI, a generic public subscription identifier GPSI, a home public land mobile network HPLMN identifier, a data network name DNN, single network slice selection assistance information S-NSSAI, an internal group identifier, and an external group identifier.

In a possible implementation, the AF request from the AF network element does not include the first target information.

In a possible implementation, the AF request sent to the UDR network element does not include the first address.

In a possible implementation, the first target information includes one or more of the SUPI, the GPSI, and the internal group identifier, and the communication unit 901 is further configured to: send seventh information to a user data management UDM network element or a BSF network element belonging to a PLMN corresponding to the HPLMN identifier, where the seventh information includes the second address and/or the address domain corresponding to the second address, and the seventh information is used to request one or more of the SUPI, the GPSI, the internal group identifier, and the external group identifier; and receive one or more of the SUPI, the GPSI, the internal group identifier, and the external group identifier from the UDM network element or the BSF network element.

In a possible implementation, before the communication unit 901 sends the AF request to the unified data repository UDR network element, the communication unit 901 is further configured to send storage request information to the UDR network element, where the storage request information includes the first target information. The communication unit 901 is further configured to receive response information sent by the UDR network element for the storage request information, where the response information indicates that storage of the AF request is allowed.

In a possible implementation, the communication unit 901 is further configured to send third information to a network repository function NRF network element, where the third information includes the second address, and the third information is used to request to query an address of a binding support function BSF network element corresponding to the second address. The communication unit 901 is further configured to receive fourth information from the NRF network element, where the fourth information indicates that the address of the BSF network element cannot be found.

In a possible implementation, the communication unit 901 is further configured to send fifth information to the BSF network element, where the fifth information includes the second address, and the fifth information is used to request to query an address of a policy control function PCF network element corresponding to the second address. The communication unit 901 is further configured to receive sixth information from the BSF network element, where the sixth information indicates that the address of the PCF network element cannot be found.

When the communication apparatus 900 is used for the function of the first NEF network element in the method embodiment corresponding to FIG. 5 or FIG. 6, the communication unit 901 is configured to receive an AF request from an application function AF network element, where the AF request is used to influence a session of a terminal device, the AF request from the AF network element includes a first identifier, and the first identifier is used to distinguish between public land mobile networks PLMNs. The communication unit 901 is configured to send the AF request to a unified data repository UDR network element.

In a possible implementation, the first identifier is one of the following: a PLMN identifier, a home public land mobile network HPLMN identifier, and a virtual local area network VLAN identifier.

In a possible implementation, the AF request sent to the UDR network element includes first target information, and the first target information includes one or more of the following: a first address, a second address, an address domain corresponding to the second address, a subscription permanent identifier SUPI, a generic public subscription identifier GPSI, an HPLMN identifier, a data network name DNN, single network slice selection assistance information S-NSSAI, an internal group identifier, an external group identifier, and the first identifier.

In a possible implementation, the AF request from the AF network element does not include the first target information.

In a possible implementation, the first target information includes one or more of the SUPI, the GPSI, the internal group identifier, and the external group identifier, and the communication unit 901 is further configured to send seventh information to a user data management UDM network element or a BSF network element belonging to a PLMN corresponding to the HPLMN identifier, where the seventh information includes the second address and/or the address domain corresponding to the second address, and the seventh information is used to request one or more of the SUPI, the GPSI, the internal group identifier, and the external group identifier. The communication unit 901 is further configured to receive one or more of the SUPI, the GPSI, the internal group identifier, and the external group identifier from the UDM or the BSF network element.

In a possible implementation, the first address is a public network address obtained by performing network address translation NAT on the second address, and the second address is a private network address of the session of the terminal device.

In a possible implementation, before the communication unit 901 sends the AF request to the unified data repository UDR network element, the communication unit 901 is further configured to send storage request information to the UDR network element, where the storage request information includes the first target information. The communication unit 901 is further configured to receive response information sent by the UDR network element for the storage request information, where the response information indicates that storage of the AF request is allowed.

When the communication apparatus 900 is used for the function of the first NEF network element in the method embodiment corresponding to FIG. 7 or FIG. 8A and FIG. 8B, the communication unit 901 is configured to receive an AF request sent by an application function AF network element, where the AF request is used to influence a session of a terminal device, the AF request sent by the AF network element includes one or more external group identifiers, and a first public land mobile network PLMN to which the one or more external group identifiers belong is not a PLMN in which the first NEF network element is located. The communication unit 901 is further configured to send ninth information to a user data management UDM network element belonging to the first PLMN, where the ninth information is used to request one or more internal group identifiers corresponding to the one or more external group identifiers. The communication unit 901 is further configured to receive tenth information sent by the UDM network element, where the tenth information includes the one or more internal group identifiers. The communication unit 901 is further configured to send the AF request to a unified data repository UDR network element.

In a possible implementation, the processing unit 902 is configured to: determine, based on a domain identifier in the one or more external group identifiers, the first PLMN to which the one or more external group identifiers belong.

In a possible implementation, when sending the ninth information to the UDM network element corresponding to the first PLMN, the communication unit 901 is specifically configured to: send, via a fourth NEF network element belonging to the first PLMN, the ninth information to the UDM network element belonging to the first PLMN. When receiving the tenth information sent by the UDM network element, the communication unit 901 is specifically configured to: receive, via the fourth NEF network element, the tenth information from the UDM network element.

In a possible implementation, the AF request sent to the UDR includes first target information, and the first target information includes one or more internal group identifiers.

The communication apparatus 900 may be configured to perform a function of the second NEF network element in the foregoing method embodiment corresponding to FIG. 3, FIG. 5, or FIG. 7. When the communication apparatus 900 is used for the function of the second NEF network element in the method embodiment corresponding to FIG. 3, FIG. 5, or FIG. 7, the communication unit 901 is configured to receive first subscription information sent by a first session management function SMF network element, where the first subscription information is used to request to subscribe to an application function AF request, the AF request is used to influence a session of a terminal device, the first subscription information includes second target information, and the second target information includes one or more of the following: a first address, a second address, an address domain corresponding to the second address, a subscription permanent identifier SUPI, a generic public subscription identifier GPSI, a home public land mobile network HPLMN identifier, a data network name DNN, single network slice selection assistance information S-NSSAI, an internal group identifier, and an external group identifier. The communication unit 901 is further configured to send second subscription information to a unified data repository UDR network element, where the second subscription information is used to request to subscribe to the AF request, and the second subscription information includes the second target information. The communication unit 901 is further configured to receive the AF request from the UDR network element, where the AF request from the UDR network element includes the second target information. The communication unit 901 is further configured to send the AF request to the first SMF network element.

In a possible implementation, the second target information further includes a first identifier, and the first identifier is used to distinguish between PLMNs.

In a possible implementation, the first identifier is one of the following: a public land mobile network PLMN identifier, an HPLMN identifier, and a virtual local area network VLAN identifier.

In a possible implementation, the first address is a public network address obtained by performing network address translation NAT on the second address, and the second address is a private network address of the session of the terminal device.

The communication apparatus 900 may be configured to perform a function of the first SMF network element in the foregoing method embodiments corresponding to FIG. 3 to FIG. 8A and FIG. 8B.

When the communication apparatus 900 is used for the function of the first SMF network element in the method embodiments corresponding to FIG. 3 to FIG. 6, the communication unit 901 is configured to send first subscription information to a second network exposure function NEF network element, where the first subscription information includes second target information, and the second target information includes one or more of the following: a first address, a second address, an address domain corresponding to the second address, a subscription permanent identifier SUPI, a generic public subscription identifier GPSI, a home public land mobile network HPLMN identifier, a data network name DNN, single network slice selection assistance information S-NSSA, an internal group identifier, and an external group identifier. The communication unit 901 is further configured to receive an application function AF request sent by the second NEF network element, where the AF request is used to influence a session of a terminal device, and the AF request from the second NEF network element includes the second target information.

In a possible implementation, the second target information further includes a first identifier, and the first identifier is used to distinguish between public land mobile networks PLMNs.

In a possible implementation, the first identifier is one of the following: a PLMN identifier, an HPLMN identifier, and a virtual local area network VLAN identifier.

In a possible implementation, when the second target information includes one or more of the SUPI, the GPSI, the HPLMN identifier, the internal group identifier, and the external group identifier, the communication unit 901 is further configured to receive eighth information sent by a second SMF network element or a policy control function PCF network element, where the eighth information includes one or more of the SUPI, the GPSI, the HPLMN identifier, the internal group identifier, and the external group identifier.

In a possible implementation, the second SMF network element and the first SMF network element do not belong to a same PLMN.

In a possible implementation, the first address is a public network address obtained by performing network address translation NAT on the second address, and the second address is a private network address of the session of the terminal device.

When the communication apparatus 900 is used for the function of the first SMF network element in the method embodiment corresponding to FIG. 7 or FIG. 8A and FIG. 8B, the communication unit 901 is configured to receive one or more internal group identifiers sent by a second SMF network element. The communication unit 901 is further configured to send first subscription information to a second network exposure function NEF network element, where the first subscription information is used to request to subscribe to an AF request, the first subscription information includes second target information, and the second target information includes the one or more internal group identifiers. The communication unit 901 is further configured to receive the AF request from the second NEF network element, where the AF request from the second NEF network element includes the second target information.

In a possible implementation, before the communication unit 901 receives the one or more internal group identifiers sent by the second SMF network element, the communication unit 901 is further configured to send internal group identifier request information to the second SMF network element.

In a possible implementation, when receiving the one or more internal group identifiers sent by the second SMF network element, the communication unit 901 is specifically configured to: receive, in a process of establishing an edge computing home routed with session breakout HR-SBO session, the one or more internal group identifiers sent by the second SMF network element.

When the communication apparatus 900 is used for a function of the UPF network element in the method embodiment corresponding to FIG. 3, the communication unit 901 is configured to receive first information sent by a first network exposure function NEF network element, where the first information includes a first address, the first address is a public network address obtained by performing network address translation NAT on a second address, the second address is a private network address of a session of a terminal device, and the first information is used to request the second address and an address domain corresponding to the second address. The communication unit 901 is further configured to send second information to the first NEF network element, where the second information includes the second address and the address domain corresponding to the second address.

When the communication apparatus 900 is used for a function of the UPF network element in the method embodiments corresponding to FIG. 3 to FIG. 8A and FIG. 8B, the communication unit 901 is configured to receive second subscription information sent by a second NEF network element, where the second subscription information is used to request to subscribe to an AF request, the AF request is used to influence a session of a terminal device, the second subscription information includes second target information, and the second target information includes one or more of the following: a first address, a second address, an address domain corresponding to the second address, a subscription permanent identifier SUPI, a generic public subscription identifier GPSI, a home public land mobile network HPLMN identifier, a data network name DNN, single network slice selection assistance information S-NSSAI, an internal group identifier, and an external group identifier. The communication unit 901 is further configured to receive and store the AF request from a first NEF network element, where the AF request includes first target information, and the first target information includes one or more of the following: the first address, the second address, the address domain corresponding to the second address, the SUPI, the GPSI, the HPLMN identifier, the DNN, the S-NSSA, the internal group identifier, and the external group identifier. The communication unit 901 is further configured to send the AF request to the second NEF network element, where the AF request sent to the second NEF network element includes the second target information.

In a possible implementation, the second target information further includes a first identifier, the first target information further includes the first identifier, and the first identifier is used to distinguish between PLMNs.

In a possible implementation, the first identifier is one of the following: a public land mobile network PLMN identifier, an HPLMN identifier, and a virtual local area network VLAN identifier.

In a possible implementation, the first target information and the second target information include same information.

In a possible implementation, before storing the AF request from the first NEF network element, the processing unit 902 is configured to determine that the first target information is subscribed to by the second NEF network element.

In a possible implementation, before the communication unit 901 receives and stores the AF request from the first NEF, the communication unit 901 is further configured to receive storage request information from the first NEF network element, where the storage request information includes the first target information, and the first target information is subscribed to by the second NEF network element. The communication unit 901 is further configured to send response information for the storage request information to the first NEF network element, where the response information indicates that storage of the AF request is allowed.

In a possible implementation, the first address is a public network address obtained by performing network address translation NAT on the second address, and the second address is a private network address of the session of the terminal device.

FIG. 10 is a diagram of a structure of a communication apparatus. The communication apparatus 1000 may be the first NEF network element, the second NEF network element, the first SMF network element, the UPF network element, or the UDR network element in the foregoing method embodiments, or may be a chip, a chip system, a processor, or the like that supports the first NEF network element, the second NEF network element, the first SMF network element, the UPF network element, or the UDR network element in implementing the foregoing methods. The communication apparatus may be configured to implement the methods described in the foregoing method embodiments. For details, refer to descriptions in the foregoing method embodiments.

The communication apparatus 1000 may include one or more processors 1001. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1000 may include one or more memories 1002, where the memory 1002 may store instructions 1004. The instructions may be run on the processor 1001, to enable the communication apparatus 1000 to perform the methods described in the foregoing method embodiments. Optionally, the memory 1002 may further store data. The processor 1001 and the memory 1002 may be separately disposed, or may be integrated together.

Optionally, the communication apparatus 1000 may further include a transceiver 1005 and an antenna 1006. The transceiver 1005 may be referred to as a transceiver unit, a transceiver machine, a transceiver circuit, or the like, and is configured to implement a transceiver function. The transceiver 1005 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 1000 is a first NEF network element, a second NEF network element, a first SMF network element, a UPF network element, or a UDR network element. The processor 1001 is configured to perform a data processing operation of the first NEF network element, the second NEF network element, the first SMF network element, the UPF network element, or the UDR network element in the foregoing method embodiments. The transceiver 1005 is configured to perform data receiving and sending operations of the first NEF network element, the second NEF network element, the first SMF network element, the UPF network element, or the UDR network element in the foregoing method embodiments.

In another possible design, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1001 may store instructions 1003, and the instructions 1003 are run on the processor 1001, to enable the communication apparatus 1000 to perform the methods described in the foregoing method embodiments. The instructions 1003 may be fixed in the processor 1001. In this case, the processor 1001 may be implemented by using hardware.

In still another possible design, the communication apparatus 1000 may include a circuit, and the circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like.

The communication apparatus described in the foregoing embodiment may be the first NEF network element, the second NEF network element, the first SMF network element, the UPF network element, or the UDR network element. However, a scope of the communication apparatus described in this embodiment of this application is not limited thereto, and the structure of the communication apparatus may not be limited by FIG. 10. The communication apparatus may be an independent device or may be a part of a large device. For example, the communication apparatus may be:
(1) an independent integrated circuit IC, a chip, or a chip system or subsystem;
(2) a set having one or more ICs, where optionally, the IC set may alternatively include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others, or the like.

For a case in which the communication apparatus may be a chip or a chip system, refer to a diagram of a structure of a chip shown in FIG. 11. The chip shown in FIG. 11 includes a processor 1101 and an interface 1102. Optionally, the chip may further include a memory 1103. There may be one or more processors 1101, and there may be a plurality of interfaces 1102.

In a design, in a case in which the chip is configured to implement a function of the first NEF network element in embodiments of this application:

The interface 1102 is configured to receive or output a signal; and
the processor 1101 is configured to perform a data processing operation of the first NEF network element in the foregoing method embodiments.

In another design, in a case in which the chip is configured to implement a function of the second NEF network element in embodiments of this application:

The interface 1102 is configured to receive or output a signal; and
the processor 1101 is configured to perform a data processing operation of the second NEF network element in the foregoing method embodiments.

In another design, in a case in which the chip is configured to implement a function of the UPF network element in embodiments of this application:

The interface 1102 is configured to receive or output a signal; and
the processor 1101 is configured to perform a data processing operation of the UPF network element in the foregoing method embodiments.

In another design, in a case in which the chip is configured to implement a function of the UDR network element in embodiments of this application:

The interface 1102 is configured to receive or output a signal; and
the processor 1101 is configured to perform a data processing operation of the UDR network element in the foregoing method embodiments.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with another feature based on a requirement. Correspondingly, the communication apparatus provided in embodiments of this application may also correspondingly implement these features or functions. Details are not described herein.

It should be understood that the processor in embodiments of this application may be an integrated circuit chip, and has a signal processing capability. In an implementation process, steps in the foregoing method embodiments may be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification include but are not limited to these memories and any memory of another suitable type.

This application further provides a computer-readable medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

An embodiment of this application further provides a computer program product. When the computer program product is run on a processor, the method procedures in the foregoing method embodiments are implemented.

The descriptions of embodiments provided in this application may refer to each other, and the descriptions of embodiments have different focuses. For a part not described in detail in an embodiment, refer to related descriptions in another embodiment. For ease of description and brevity, for functions of the apparatuses and devices provided in embodiments of this application and operations performed by the apparatuses and devices, refer to related descriptions of method embodiments of this application. Method embodiments and apparatus embodiments may also be mutually referenced, combined, or cited.

A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the functions for each particular application, but it should not be understood as that the implementation goes beyond the protection scope of embodiments of this application.

This application further provides a computer-readable storage medium. The computer-readable storage medium stores a computer program, and when the computer-readable storage medium is executed by a computer, a function of any one of the foregoing method embodiments is implemented.

This application further provides a computer program product. When the computer program product is executed by a computer, a function of any one of the foregoing method embodiments is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

A person of ordinary skill in the art may understand that various numerical numbers such as "first" and "second" in this application are merely used for differentiation for ease of description, and are not intended to limit the scope and sequence of embodiments of this application.

The correspondences shown in the tables in this application may be configured, or may be predefined. Values of the information in the tables are merely examples, and other values may be configured. This is not limited in this application. When a correspondence between the information and each parameter is configured, not all correspondences shown in the tables need to be configured. For example, in the tables in this application, correspondences shown in some rows may alternatively not be configured. For another example, proper deformations and adjustments such as splitting and combination may be performed based on the foregoing tables. Names of the parameters shown in titles of the foregoing tables may alternatively be other names that can be understood by the communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used. "Predefine" in this application may be understood as "define", "predefinition", "store", "pre-store", "pre-negotiate", "preconfigure", "solidify", or "pre-burn".

A person of ordinary skill in the art may be aware that, in combination with the examples described in embodiments disclosed in this specification, units and algorithm steps can be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

## Claims

1. A communication method, applied to a first network exposure function NEF network element, wherein the method comprises:
receiving an AF request from an application function AF network element, wherein the AF request is used to influence a session of a terminal device, and the AF request from the AF network element comprises a first address;
obtaining a second address corresponding to the first address and an address domain corresponding to the second address; and
sending the AF request to a unified data repository UDR network element.

2. The method according to claim 1, wherein the first address is a public network address obtained by performing network address translation NAT on the second address, and the second address is a private network address of the session of the terminal device.

3. The method according to claim 1 or 2, wherein the obtaining the second address corresponding to the first address and the address domain corresponding to the second address comprises:
sending first information to a user plane function UPF network element, wherein the first information comprises the first address, the UPF network element is a UPF network element that performs NAT on the second address, and the first information is used to request the second address and the address domain corresponding to the second address; and
receiving second information from the UPF network element, wherein the second information comprises the second address and the address domain corresponding to the second address.

4. The method according to any one of claims 1 to 3, wherein the address domain corresponding to the second address does not belong to a public land mobile network PLMN to which the first NEF network element belongs.

5. The method according to claim 4, wherein the method further comprises:
determining, based on the address domain corresponding to the second address, a PLMN that allocates the second address to the session.

6. The method according to any one of claims 1 to 5, wherein the AF request sent to the UDR network element comprises first target information, and the first target information comprises one or more of the following: the first address, the second address, the address domain corresponding to the second address, a subscription permanent identifier SUPI, a generic public subscription identifier GPSI, a home public land mobile network HPLMN identifier, a data network name DNN, single network slice selection assistance information S-NSSAI, an internal group identifier, and an external group identifier.

7. The method according to claim 6, wherein the AF request from the AF network element does not comprise the first target information.

8. The method according to claim 6 or 7, wherein the AF request sent to the UDR network element does not comprise the first address.

9. The method according to any one of claims 6 to 8, wherein the first target information comprises one or more of the SUPI, the GPSI, and the internal group identifier, and the method further comprises:
sending seventh information to a user data management UDM network element or a BSF network element belonging to a PLMN corresponding to the HPLMN identifier, wherein the seventh information comprises the second address and/or the address domain corresponding to the second address, and the seventh information is used to request one or more of the SUPI, the GPSI, the internal group identifier, and the external group identifier; and
receiving one or more of the SUPI, the GPSI, the internal group identifier, and the external group identifier from the UDM network element or the BSF network element.

10. A communication method, applied to a first network exposure function NEF network element, wherein the method comprises:
receiving an AF request from an application function AF network element, wherein the AF request is used to influence a session of a terminal device, the AF request from the AF network element comprises a first identifier, and the first identifier is used to distinguish between public land mobile networks PLMNs; and
sending the AF request to a unified data repository UDR network element.

11. The method according to claim 10, wherein the first identifier is one of the following: a PLMN identifier, a home public land mobile network HPLMN identifier, and a virtual local area network VLAN identifier.

12. The method according to claim 10 or 11, wherein the AF request sent to the UDR network element comprises first target information, and the first target information comprises one or more of the following: a first address, a second address, an address domain corresponding to the second address, a subscription permanent identifier SUPI, a generic public subscription identifier GPSI, an HPLMN identifier, a data network name DNN, single network slice selection assistance information S-NSSAI, an internal group identifier, an external group identifier, and the first identifier.

13. The method according to claim 12, wherein the AF request from the AF network element does not comprise the first target information.

14. The method according to claim 12 or 13, wherein the first target information comprises one or more of the SUPI, the GPSI, the internal group identifier, and the external group identifier, and the method further comprises:
sending seventh information to a user data management UDM network element or a BSF network element belonging to a PLMN corresponding to the HPLMN identifier, wherein the seventh information comprises the second address and/or the address domain corresponding to the second address, and the seventh information is used to request one or more of the SUPI, the GPSI, the internal group identifier, and the external group identifier; and
receiving one or more of the SUPI, the GPSI, the internal group identifier, and the external group identifier from the UDM or the BSF network element.

15. The method according to any one of claims 12 to 14, wherein the first address is a public network address obtained by performing network address translation NAT on the second address, and the second address is a private network address of the session of the terminal device.

16. A communication method, applied to a second network exposure function NEF network element, wherein the method comprises:
receiving first subscription information sent by a first session management function SMF network element, wherein the first subscription information is used to request to subscribe to an application function AF request, the AF request is used to influence a session of a terminal device, the first subscription information comprises second target information, and the second target information comprises one or more of the following: a first address, a second address, an address domain corresponding to the second address, a subscription permanent identifier SUPI, a generic public subscription identifier GPSI, a home public land mobile network HPLMN identifier, a data network name DNN, single network slice selection assistance information S-NSSAI, an internal group identifier, and an external group identifier;
sending second subscription information to a unified data repository UDR network element, wherein the second subscription information is used to request to subscribe to the AF request, and the second subscription information comprises the second target information;
receiving the AF request from the UDR network element, wherein the AF request from the UDR network element comprises the second target information; and
sending the AF request to the first SMF network element.

17. The method according to claim 16, wherein the second target information further comprises a first identifier, and the first identifier is used to distinguish between PLMNs.

18. The method according to claim 16 or 17, wherein the first identifier is one of the following: a public land mobile network PLMN identifier, an HPLMN identifier, and a virtual local area network VLAN identifier.

19. The method according to any one of claims 16 to 18, wherein the first address is a public network address obtained by performing network address translation NAT on the second address, and the second address is a private network address of the session of the terminal device.

20. A communication method, applied to a first session management function SMF network element, wherein the method comprises:
sending first subscription information to a second network exposure function NEF network element, wherein the first subscription information comprises second target information, and the second target information comprises one or more of the following: a first address, a second address, an address domain corresponding to the second address, a subscription permanent identifier SUPI, a generic public subscription identifier GPSI, a home public land mobile network HPLMN identifier, a data network name DNN, single network slice selection assistance information S-NSSA, an internal group identifier, and an external group identifier; and
receiving an application function AF request sent by the second NEF network element, wherein the AF request is used to influence a session of a terminal device, and the AF request from the second NEF network element comprises the second target information.

21. The method according to claim 20, wherein the second target information further comprises a first identifier, and the first identifier is used to distinguish between public land mobile networks PLMNs.

22. The method according to claim 20 or 21, wherein the first identifier is one of the following: a PLMN identifier, an HPLMN identifier, and a virtual local area network VLAN identifier.

23. The method according to any one of claims 20 to 22, wherein when the second target information comprises one or more of the SUPI, the GPSI, the HPLMN identifier, the internal group identifier, and the external group identifier, the method further comprises:
receiving eighth information sent by a second SMF network element or a policy control function PCF network element, wherein the eighth information comprises one or more of the SUPI, the GPSI, the HPLMN identifier, the internal group identifier, and the external group identifier.

24. The method according to claim 22, wherein the second SMF network element and the first SMF network element do not belong to a same PLMN.

25. The method according to any one of claims 19 to 23, wherein the first address is a public network address obtained by performing network address translation NAT on the second address, and the second address is a private network address of the session of the terminal device.

26. A communication apparatus, comprising a function or a unit configured to perform the method according to any one of claims 1 to 9 or perform the method according to any one of claims 10 to 15, a function or a unit configured to perform the method according to any one of claims 16 to 19, or a function or a unit configured to perform the method according to any one of claims 20 to 25.

27. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 by using a logic circuit or executing code instructions, the processor is configured to implement the method according to any one of claims 10 to 15 by using a logic circuit or executing code instructions, the processor is configured to implement the method according to any one of claims 16 to 19 by using a logic circuit or executing code instructions, or the processor is configured to implement the method according to any one of claims 20 to 25 by using a logic circuit or executing code instructions.

28. A computer-readable storage medium, wherein the storage medium stores a computer program or instructions, and when the computer program or the instructions are executed by a communication apparatus, the method according to any one of claims 1 to 9 is implemented, the method according to any one of claims 10 to 15 is implemented, the method according to any one of claims 16 to 19 is implemented, or the method according to any one of claims 20 to 25 is implemented.
